(19) Europäisches Patentamt
European Patent Office
Office européen des brevets

(11) **EP 4 412 146 A1**

(12) **DEMANDE DE BREVET EUROPEEN**

(43) Date de publication:
**07.08.2024 Bulletin 2024/32**

(21) Numéro de dépôt: **24155421.1**

(22) Date de dépôt: **02.02.2024**

(51) Classification Internationale des Brevets (IPC):
**H04L 9/08** (2006.01)     **H04L 9/40** (2022.01)
**H04L 45/00** (2022.01)

(52) Classification Coopérative des Brevets (CPC):
**H04L 63/062; H04L 9/0855;** H04L 63/1466;
H04L 2463/061

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **02.02.2023 FR 2300974**

(71) Demandeur: **Airbus Defence and Space SAS
31402 Toulouse Cedex 4 (FR)**

(72) Inventeurs:
• **LABONNE, Maxime
78990 ELANCOURT (FR)**
• **CARTIGNY, Marc
78990 ELANCOURT (FR)**
• **POLETTI, Claude
78990 ELANCOURT (FR)**
• **LOPEZ-CORONADO, Jorge-Eleazar
78990 ELANCOURT (FR)**

(74) Mandataire: **Cabinet Le Guen Maillet
3, impasse de la Vigie
CS 71840
35418 Saint-Malo Cedex (FR)**

(54) **PROCEDE AMELIORE DE TRANSMISSION D'UN CONTENU A L'AIDE D'UN RESEAU DE DISTRIBUTION QUANTIQUE DE CLES**

(57) L'invention concerne un procédé de transmission d'un contenu (A) dans un réseau de communication (N) comprenant un réseau de distribution quantique (QKDN) de clés dites clés quantiques (Knj), le réseau de communication comprenant un dispositif gestionnaire de clés (KM) connecté à des noeuds de transmission (N1, N2, N3, N4, N5) et connecté audit réseau de distribution quantique (QKDN) de clés, lesdits noeuds de transmission (N1, N2, N3, N4, N5) étant aptes à communiquer dans le réseau de communication et à transmettre et recevoir des clés quantiques (Knj) dans ledit réseau de distribution quantique de clés, ledit procédé comprenant des envois et des réceptions de messages de contrôle depuis et vers ledit gestionnaire de plan de contrôle (CP) pour organiser le transfert dudit contenu (A) dans ledit réseau de communication (N), lesquels messages comprennent des condensats pour identifier des clés quantiques. L'invention concerne en outre un dispositif gestionnaire de plan de contrôle (CP) configuré pour exécuter ledit procédé.

Fig. 3

EP 4 412 146 A1

**Description**

DOMAINE TECHNIQUE

La présente invention concerne un procédé de transmission sécurisée d'un contenu entre deux noeuds de transmission d'un réseau de communication comprenant un réseau quantique de distribution de clés et un dispositif gestionnaire de plan de contrôle en charge du séquencement d'opérations utiles à la transmission du contenu dans le réseau. Au moins un mode de réalisation concerne une transmission améliorée d'une clé de chiffrement entre deux noeuds de transmission d'un réseau de communication. L'invention concerne plus particulièrement la réduction de la surface d'attaque lors d'une telle transmission de contenu.

ÉTAT DE LA TECHNIQUE ANTÉRIEURE

Il est connu de transférer de façon sécurisée une clé de chiffrement, encore appelée couramment clé cryptographique, entre deux noeuds de transmission d'un réseau de communication, à l'aide d'un réseau quantique de distribution de clés. Un tel transfert de clé de chiffrement, qui en permet le partage entre deux participants que sont son émetteur et son destinataire, vise à opérer ensuite des communications chiffrées entre ces deux participants. Un réseau quantique de distribution de clés est considéré comme étant « quantique » dans la mesure où il manipule des clés dites clés quantiques, dont la difficulté d'interception se fonde non sur une difficulté calculatoire (mathématique) supposée d'un problème (comme c'est le cas pour de nombreux procédés cryptographiques) mais sur des propriétés fondamentales de la physique quantique appliquée aux particules de type photon. La mise en oeuvre d'un échange de clé quantique se fonde sur une capacité à générer des objets quantiques aléatoires, à mesurer ces objets quantiques, et à les transmettre ensuite sur des distances suffisantes, par exemple entre deux noeuds de transmission d'un réseau de communication, au niveau d'une couche de communication dite quantique utilisant des moyens optiques. La sécurité des protocoles d'échange quantique de clé (ou d'échange de clé quantique) est basée sur l'hypothèse que, selon un théorème dit de non-clonage, un adversaire ne peut apprendre l'état d'une particule avant sa mesure et qu'une mesure de l'état d'une particule quantique altère son état. Cette sécurité repose donc sur une propriété de la physique quantique.

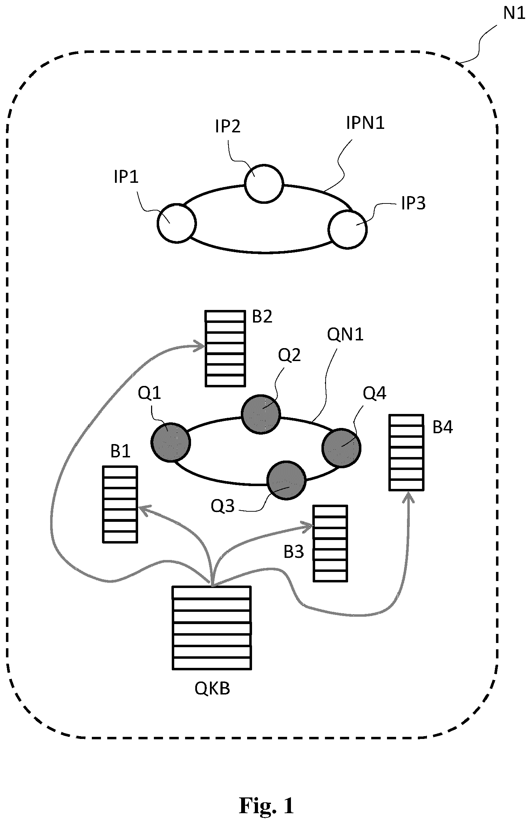

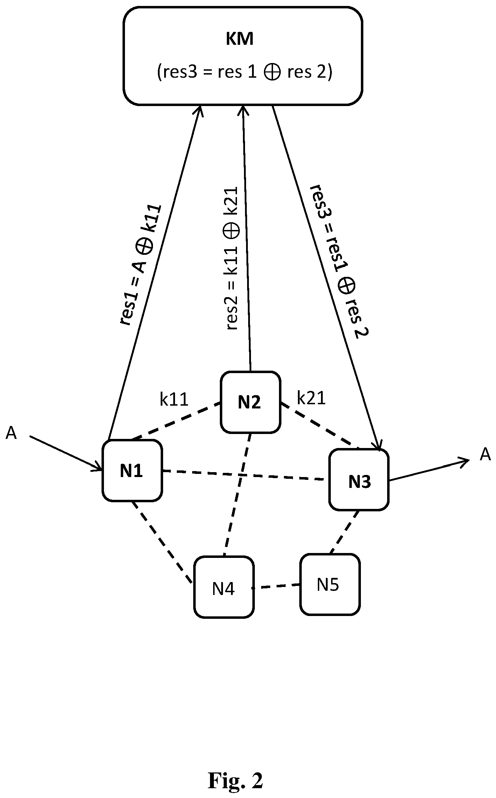

Des méthodes de partage de clé de chiffrement symétrique entre un émetteur et un destinataire reliés à un même réseau de communication utilisent des noeuds de transmission quantiques configurés chacun pour opérer des transmissions dans une couche de communication classique, par exemple selon un protocole IP, et pour opérer uniquement des transmissions de clés quantiques dans une couche de communication quantique optique, dite couche quantique, en mettant à profit un dispositif gestionnaire de clés connecté aux noeuds de transmission. Selon ces méthodes, le dispositif gestionnaire de clés utilisé reçoit des résultats intermédiaires d'une fonction de dérivation de clés quantiques, laquelle fonction présente des propriétés particulières, depuis un noeud de transmission source (émetteur de la clé de chiffrement à partager) et depuis un ou plusieurs noeuds de transmission intermédiaires, entre lesquels circulent des clés quantiques, et en transmettant ensuite à un noeud de transmission destinataire (récepteur de la clé de chiffrement à partager) un résultat final d'opérations exécutées par le dispositif gestionnaire de clés, à partir duquel le noeud de transmission destinataire peut retrouver la clé de chiffrement à partager, sans que celle-ci ne circule dans le réseau de communication et sans qu'il ne soit possible de la retrouver à partir d'un résultat intermédiaire transmis dans le réseau de communication. Une telle méthode de partage de clé de chiffrement est décrite dans la partie de la description de la présente demande, en relation avec les Fig. 1 et Fig. 2, dans un exemple selon lequel une fonction KDF de dérivation de clé est la fonction dite *ou exclusif,* encore couramment nommée *xor* et dont l'opérateur est ici représenté par le symbole « $\oplus$ », appliquée à deux données dites données d'entrée. Bien que ce principe de transfert de clé entre un noeud de transmission source et un noeud de transmission destinataire soit connu, il n'est pas utilisé plus largement pour la transmission d'un contenu quelconque à travers un réseau de communication, tel que par exemple un réseau maillé, dans la mesure où il n'existe pas de protocole de contrôle dédié à la mise en oeuvre d'un tel transfert via une pluralité de noeuds de transmission opérant dans un réseau de communication et étant compris en outre dans un réseau quantique de distribution de clés. Il existe en outre un besoin constant d'augmentation de la sécurité des transferts de contenus dans un tel réseau de communication et la situation peut être améliorée.

EXPOSÉ DE L'INVENTION

Un objet de la présente invention est de réduire la surface d'attaque d'une transmission sécurisée d'un contenu dans un réseau de communication en accroissant le niveau de sécurité de transmission offert par les méthodes de partage de clé de chiffrement grâce à un réseau quantique de distribution de clés.

A cet effet, il est proposé un procédé de transmission d'un contenu entre deux noeuds de transmission d'un réseau de communication comprenant ces deux noeuds de transmission et au moins un autre noeud de transmission dit noeud intermédiaire de transmission, les noeuds de transmission étant compris en outre dans un réseau de distribution quantique de clés dites clés quantiques, le réseau de communication comprenant un dispositif gestionnaire de clés connecté auxdits noeuds de transmission et connecté audit réseau de distribution quantique de clés, les noeuds de transmission comprenant chacun une pluralité d'interfaces de communication pour communiquer dans le réseau de communication et une pluralité d'interfaces de transmission de clés quantiques pour transmettre et recevoir lesdites clés quantiques dans ledit réseau de distribution quantique de clés, et les noeuds de transmission étant configurés en outre pour opérer chacun une fonction de dérivation de clé et en adresser le résultat audit dispositif gestionnaire de clés, et pour opérer chacun une fonction d'extraction de clé à partir d'informations reçues du dispositif gestionnaire de clés et d'une clé quantique reçue, ledit réseau de communication comprenant en outre un dispositif gestionnaire de plan de contrôle configuré pour exécuter les étapes :

- recevoir, depuis l'un, dit noeud source, parmi lesdits deux noeuds de transmission, un message de requête en transmission dudit contenu vers l'autre, dit noeud destinataire, parmi lesdits deux noeuds de transmission, ledit message de requête comprenant un identifiant dudit noeud destinataire,
- obtenir une route déterminée comme passant par ledit au moins un noeud intermédiaire de transmission ou par une suite de noeuds intermédiaires de transmission entre ledit noeud source et ledit noeud destinataire, et un identifiant de service de transmission dudit contenu associé à ladite route,
- émettre et recevoir des messages de contrôle vers et depuis lesdits noeuds de transmission et vers ledit dispositif gestionnaire de clés, aptes à générer des transmissions de clés entre des paires de noeuds parmi lesdits noeuds, définis selon ladite route déterminée en relation avec ledit identifiant de service de transmission, le procédé de transmission étant tel que, lorsqu'un message de contrôle émis vers ou depuis ledit gestionnaire de plan de contrôle comprend un identifiant d'une clé quantique transmise ou à transmettre entre deux noeuds de transmission, cet identifiant est un condensat de ladite clé quantique transmise ou à transmettre.

Ainsi, il est avantageusement possible de transmettre un contenu quelconque de bout-en-bout, entre un noeud de transmission source et un noeud de transmission destinataire d'un réseau de communication comprenant un réseau quantique de distribution de clés, grâce à une gestion simple et centralisée, et en offrant un niveau de sécurité accru dans le mesure où des identifiants de clés quantiques transmis entre les noeuds de transmission et le dispositif gestionnaire de plan de contrôle, le sont chacun sous forme d'un condensat d'une clé quantique.

Le procédé selon l'invention peut également comporter les caractéristiques suivantes, considérées seules ou en combinaison :

- l'envoi et la réception des messages de contrôle comprend :

    o envoyer, audit gestionnaire de clés, un message de contrôle comprenant ledit identifiant de service de transmission,
    o envoyer, audit noeud source, un message de contrôle comprenant au moins ledit identifiant de service et un identifiant d'une interface d'émission de clés quantiques,
    o recevoir, dudit noeud source, un message de contrôle comprenant au moins un identifiant de clé quantique sous forme de condensat de ladite clé quantique et ledit identifiant de service de transmission dudit contenu,
    o envoyer, à chaque noeud intermédiaire de transmission, un message de contrôle comprenant au moins ledit identifiant de service, un identifiant d'interface de réception de clés quantiques et un identifiant de clé quantique reçue ou à recevoir sous forme de condensat de ladite clé quantique via ladite interface de réception de clés quantiques, et un identifiant d'interface d'émission de clés quantiques,
    o recevoir, de chaque noeud intermédiaire de transmission, un message de contrôle comprenant au moins un identifiant de clé quantique sous forme de condensat de ladite clé quantique et ledit identifiant de service de transmission dudit contenu,
    o envoyer, audit dispositif gestionnaire de clés, un message de contrôle comprenant un identifiant de fin de séquence et un identifiant du noeud destinataire, et,
    o envoyer, audit noeud destinataire, un message de contrôle comprenant au moins ledit identifiant de service, un identifiant d'interface de réception de clés quantiques et un identifiant de clé quantique sous forme de condensat de ladite clé quantique reçue ou à recevoir via ladite interface de réception de clés quantiques.

- l'envoi du message de contrôle audit noeud source et l'envoi d'un message de contrôle à chacun desdits noeuds intermédiaires comprend en outre un identifiant unique de séquence d'une suite d'identifiants uniques de séquences déterminée pour ladite transmission dudit contenu en relation avec ledit identifiant de service, chaque identifiant unique de séquence de ladite suite d'identifiants uniques de séquence étant apte à déterminer le rang d'une séquence auquel il est associé dans une suite de séquences définie en relation avec ladite transmission dudit contenu.

Avantageusement, il est ainsi possible d'utiliser une fonction KDF de dérivation de clé non commutative et d'opérer un reroutage en cours de transmission, en cas de dysfonctionnement d'un lien dans le réseau de communication.

- la fonction de dérivation de clé présente des propriétés selon lesquelles ladite fonction s'applique à deux données, dites données d'entrée, et que le résultat de ladite fonction appliquée auxdites deux données est nul lorsque lesdites deux données sont égales entre elles et que le résultat de ladite fonction appliquée auxdites deux données est égal à l'une desdites deux données lorsque l'autre desdites deux données est nulle.
- la fonction de dérivation de clés est une fonction dite « ou exclusif » et lesdites deux données présentent la forme de mots binaires de tailles identiques.

L'invention a également pour objet un réseau de communication comprenant un dispositif gestionnaire de plan de contrôle configuré pour opérer un contrôle de transmission d'un contenu entre deux noeuds de transmission dudit réseau de communication comprenant en outre au moins un autre noeud de transmission dit noeud intermédiaire de transmission, lesdits noeuds de transmission étant compris en outre dans un réseau de distribution quantique de clés dites clés quantiques, le réseau de communication comprenant un dispositif gestionnaire de clés connecté auxdits noeuds de transmission et connecté audit réseau de distribution quantique de clés, lesdits noeuds de transmission comprenant chacun une pluralité d'interfaces de communication pour communiquer dans le réseau de communication et une pluralité d'interfaces de transmission de clés quantiques pour transmettre et recevoir lesdites clés quantiques dans ledit réseau de distribution quantique de clés, et lesdits noeuds de transmission étant configurés en outre pour opérer chacun une fonction de dérivation de clé et en adresser le résultat audit dispositif gestionnaire de clés et pour opérer chacun une fonction d'extraction de clé à partir d'informations reçues dudit dispositif gestionnaire de clés et d'une clé quantique, ledit réseau de communication comprenant en outre un dispositif gestionnaire de plan de contrôle, ledit dispositif gestionnaire de plan de contrôle comprenant de la circuiterie électrique et électronique configurée pour :

- recevoir, depuis l'un, dit noeud source, parmi lesdits deux noeuds de transmission, un message de requête en transmission dudit contenu vers l'autre, dit noeud destinataire, parmi lesdits deux noeuds de transmission, ledit message de requête comprenant un identifiant dudit noeud destinataire,
- obtenir une route déterminée comme passant par ledit au moins un noeud intermédiaire de transmission ou par une suite de noeuds intermédiaires de transmission entre ledit noeud source et ledit noeud destinataire, et un identifiant de service de transmission dudit contenu associé à ladite route,
- émettre et recevoir des messages de contrôle vers et depuis lesdits noeuds de transmission ou vers ledit dispositif gestionnaire de clés, aptes à générer des transmissions de clés quantiques entre des paires de noeuds parmi lesdits noeuds, définis selon ladite route déterminée en relation avec ledit identifiant de service de transmission,

le réseau de communication étant configuré tel que, lorsqu'un message de contrôle émis vers ou depuis le gestionnaire de plan de contrôle comprend un identifiant d'une clé quantique transmise ou à transmettre entre deux noeuds de transmission, cet identifiant est un condensat de la clé quantique transmise ou à transmettre.

Le dispositif gestionnaire de plan de contrôle selon l'invention peut également comporter les caractéristiques suivantes, considérées seules ou en combinaison :

- Le dispositif gestionnaire de plan de contrôle comprend en outre de la circuiterie électronique configurée pour :

  o envoyer, audit noeud source, un message de contrôle comprenant au moins ledit identifiant de service, un identifiant d'une interface d'émission de clés quantiques,
  o recevoir, dudit noeud source, un message de contrôle comprenant au moins un identifiant de clé quantique sous forme de condensat de ladite clé quantique et ledit identifiant de service de transmission dudit contenu,
  o envoyer, à chaque noeud intermédiaire de transmission, un message de contrôle comprenant au moins ledit identifiant de service, un identifiant d'interface de réception de clés quantiques et un identifiant de clé quantique sous forme de condensat de ladite clé quantique reçue ou à recevoir via ladite interface de réception de clés quantiques, un identifiant d'interface d'émission de clés quantiques,
  o recevoir, de chaque noeud intermédiaire de transmission, un message de contrôle comprenant au moins un identifiant de clé quantique sous forme de condensat de ladite clé quantique et ledit identifiant de service de transmission dudit contenu,
  o envoyer, audit dispositif gestionnaire de clés, un message de contrôle comprenant un identifiant de fin de séquence et un identifiant du noeud destinataire, et,
  o envoyer, audit noeud destinataire, un message de contrôle comprenant au moins ledit identifiant de service, un identifiant d'interface de réception de clés quantiques et un identifiant de clé quantique sous forme de condensat de ladite clé quantique reçue ou à recevoir via ladite interface de réception de clés quantiques.

- Le dispositif gestionnaire de plan de contrôle comprend en outre de la circuiterie électronique configurée pour insérer dans le message de contrôle audit noeud source et dans le message de contrôle à chacun desdits noeuds intermédiaires un identifiant unique de séquence d'une suite d'identifiants uniques de séquence déterminée pour ladite transmission dudit contenu en relation avec ledit identifiant de service, chaque identifiant unique de séquence de ladite suite d'identifiants uniques de séquence étant apte à déterminer le rang d'une séquence auquel il est associé dans une suite de séquences définie en relation avec ladite transmission dudit contenu.

L'invention concerne de plus un réseau de communication comprenant une pluralité de noeuds de transmission, un dispositif gestionnaire de clés, ainsi qu'un dispositif gestionnaire de plan de contrôle tel que précédemment décrit, dans lequel chacun des noeuds de transmission est configuré en outre pour :

- envoyer un message au dispositif gestionnaire de clés ledit message adressé audit dispositif gestionnaire de clés comprenant un résultat de fonction de dérivation de clé, ledit identifiant de service, et un identifiant de séquence d'une suite d'identifiants uniques de séquences déterminée pour ladite transmission dudit contenu en relation avec ledit identifiant de service, chaque identifiant unique de séquence de ladite suite d'identifiants uniques de séquence étant apte à déterminer le rang d'une séquence auquel il est associé dans une suite de séquences définie en relation avec ladite transmission dudit contenu, et
- recevoir dudit dispositif gestionnaire de clés un message comprenant ledit identifiant de service et un résultat de fonction de dérivation de clés.

L'invention a également pour objet un noeud de transmission dans un réseau de distribution quantique de clés quantiques, le noeud de transmission étant configuré pour opérer, à partir d'au moins une clé quantique, une fonction de dérivation de clé ou une fonction d'extraction de clé, le noeud de transmission comprenant des moyens de génération, de mémorisation, de réception et de transmission d'une clé quantique, le noeud de transmission comprenant en outre des moyens de réception et d'émission de messages de contrôle aptes à opérer, en combinaison avec un dispositif gestionnaire de clés et un dispositif gestionnaire de plan de contrôle, un procédé de transmission d'un contenu dans un réseau de communication comprenant le noeud de transmission, et le noeud de transmission étant tel qu'il comprend de la circuiterie électronique et/ou informatique configurée pour, lorsqu'un envoi de clé quantique depuis le noeud de transmission est requis :

- opérer une fonction de hachage ayant pour variable d'entrée ladite clé quantique transmise ou à transmettre,
- transmettre un premier condensat, résultat de ladite fonction de hachage appliquée à ladite clé quantique transmise ou à transmettre, le premier condensat opérant comme un identifiant de la clé quantique selon le procédé de transmission de contenu,

et pour, à partir d'une clé quantique reçue par le noeud de transmission :

- opérer ladite fonction de hachage ayant pour variable d'entrée la clé quantique reçue pour obtenir un deuxième condensat et enregistrer dans une mémoire le deuxième condensat en association avec ladite clé quantique reçue,
- recevoir, le premier condensat opérant comme un identifiant de clé quantique, et,
- identifier une clé quantique reçue, par comparaison du premier condensat avec une liste de condensats comprenant le deuxième condensat déterminé.

L'invention a également pour objet un produit programme d'ordinateur comprenant des instructions de codes de programme pour exécuter les étapes d'un procédé tel que précédemment décrit, lorsque ce programme est exécuté par un processeur d'un dispositif gestionnaire de plan de contrôle.

Enfin, l'invention concerne aussi un support de stockage comprenant un produit programme d'ordinateur tel que précité.

BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints :

[Fig. 1] illustre schématiquement un noeud de transmission d'un réseau de communication comprenant un module de communication via un réseau IP et un module de communication de clés quantiques ;
[Fig. 2] illustre schématiquement une transmission d'un contenu entre deux noeuds de transmission d'un réseau de communication, via un noeud de communication intermédiaire, selon l'art antérieur ;

[Fig. 3] illustre schématiquement un réseau de communication comprenant des noeuds de transmission, un dispositif gestionnaire de clés ainsi qu'un dispositif gestionnaire de plan de contrôle, selon un mode de réalisation ;

[Fig. 4] illustre schématiquement un réseau quantique de distribution de clés compris dans le réseau de communication déjà illustré sur la Fig. 3, selon un mode de réalisation ;

[Fig. 5] illustre un exemple d'architecture interne d'un noeud de transmission tel que décrit en relation avec les Fig. 1, Fig. 2 et Fig.3, selon un mode de réalisation ;

[Fig. 6] illustre un exemple d'architecture interne d'un dispositif gestionnaire de clés tel que décrit en relation avec les Fig. 1, Fig. 2 et Fig.3, selon un mode de réalisation ;

[Fig. 7] illustre un exemple d'architecture interne d'un dispositif gestionnaire de plan de contrôle tel que décrit en relation avec les Fig. 3 et Fig. 4, selon un mode de réalisation ;

[Fig. 8] est un diagramme illustrant un séquencement d'opérations mis en oeuvre selon un procédé de transmission d'un contenu A entre deux noeuds de transmission d'un réseau de communication, via un noeud de communication intermédiaire, selon un mode de réalisation ;

[Fig. 9] est un diagramme illustrant un séquencement d'opérations mis en oeuvre selon un procédé de transmission d'un contenu A entre deux noeuds de transmission d'un réseau de communication, via trois noeuds intermédiaires de transmission, selon un mode de réalisation ;

[Fig. 10] est une représentation schématique d'un noeud de transmission du réseau de communication déjà décrit sur la Fig. 3 ;

[Fig. 11] est un ordinogramme illustrant un procédé de transmission d'un contenu A entre deux noeuds de transmission d'un réseau de communication, via au moins un noeud de communication intermédiaire, exécuté dans un dispositif gestionnaire de plan de contrôle selon un mode de réalisation ; et,

[Fig. 12] est un diagramme illustrant une transmission de clé quantique entre deux noeuds de transmission d'un réseau de communication comprenant une transmission d'un identifiant de clé quantique sous la forme d'un condensat de clé quantique, selon un mode de réalisation.

## EXPOSÉ DÉTAILLÉ DE MODES DE RÉALISATION

La Fig. 1 illustre schématiquement un noeud de transmission N1 configuré pour communiquer dans réseau de communication de type réseau IP (du sigle anglais « Internet Protocol ») et pour participer à un réseau quantique de distribution de clés adapté à la transmission de clés quantiques entre deux noeuds de transmission adjacents. Les termes « noeuds de transmission adjacents » désignent ici indifféremment une proximité physique ou une proximité logique et correspondent à deux noeuds de transmission susceptibles d'opérer des transmissions entre eux sans que les données transmises ne transitent via un noeud de communication intermédiaire. Le noeud de transmission N1 peut être intégré à un équipement de communication quelconque, tel qu'un routeur ou un chiffreur, par exemple. Le noeud de transmission N1 comprend un module de communication IPN1 configuré pour opérer des communications dans un réseau de communication de type IP. Le module de communication IPN1 comprend des interfaces de communication aptes à opérer chacune des transmissions de données dans un réseau de communication de type IP. Selon l'exemple décrit, le noeud de transmission N1 comprend une interface de communication IP1, une interface de communication IP2 et une interface de communication IP3, toutes aptes à opérer des transmissions de données via un réseau de communication de type IP. Le noeud de transmission N1 comprend de plus un module de communication QN1 dit module quantique (d'un type appelé usuellement « QKDnode »), configuré pour la génération, le stockage et la transmission de clés quantiques. Le module quantique QN1 comprend des interfaces Q1, Q2, Q3 et Q4, dites interfaces quantiques configurées chacune pour opérer des transmissions de clés quantiques via des moyens optiques de transmission. Les interfaces quantiques Q1, Q2, Q3 et Q4 sont notamment prévues chacune pour transmettre des clés quantiques vers des interfaces similaires (configurées en réception) d'un noeud de transmission similaire, par exemple, vers un noeud adjacent d'un même réseau de communication opérant des fonctions de noeud quantique de type QKDnode dans un réseau quantique de distribution de clés. Les interfaces quantiques Q1, Q2, Q3 et Q4, sont en outre configurées chacune pour recevoir des clés quantiques à partir d'une source externe, via des moyens optiques de transmission, par exemple, depuis un noeud adjacent d'un même réseau de communication opérant des fonctions de noeud quantique QKDnode dans un réseau quantique de distribution de clés. Selon un mode de réalisation, les moyens optiques sont configurés pour la transmission de clés quantiques à travers des fibres optiques ou via des moyens de communication à technologie « laser » communément appelés « *Laser on the air* ». Chacune des interfaces quantiques Q1, Q2, Q3 et Q4 comprend une mémoire tampon de stockage de clés quantiques alimentée en clés quantiques à partir d'un générateur QKB de clés quantiques. Ainsi, l'interface quantique Q1 comprend une mémoire tampon de stockage de clés quantiques B1 ; l'interface quantique Q2 comprend une mémoire tampon de stockage de clés quantiques B2 ; l'interface quantique Q3 comprend une mémoire tampon de stockage de clés quantiques B3 et l'interface quantique Q4 comprend une mémoire tampon de stockage de clés quantiques B4. Selon un exemple de réalisation, le générateur QKB de clés quantiques alimente chacune des mémoires tampon de stockage de sorte qu'une clé quantique puisse être délivrée sur une interface quantique déterminée quand une transmission de clé quantique est nécessaire. Par exemple, le générateur QKB de clés quantiques opère un remplissage de chacune des mémoires tampon avec un même nombre prédéfini de clés quantiques avant qu'une première transmission de clé quantique ait lieu, puis maintient un niveau de remplissage dans chacune des mémoires tampon de clés quantiques B1, B2, B3 et B4 au fil des transmissions de clés quantiques qui ont été opérées par le module quantique QN1. Selon un mode de réalisation, les clés quantiques générées et stockées dans les mémoires tampon de stockages de clés quantiques présentent une taille (une largeur) fixe prédéfinie. Selon une variante de réalisation, la taille d'une clé quantique peut être ajustée en fonction de paramètres de fonctionnement eux-mêmes ajustés en fonction de besoins spécifiques en cours d'utilisation, éventuellement de façon dynamique. Selon un mode de réalisation, le module de communication IPN1 et le module quantique QN1 sont contrôlés par une même unité de contrôle configurée pour synchroniser leur fonctionnement. Ainsi, par exemple, un message de contrôle peut être reçu par le noeud de transmission N1 via le module de communication IPN1 et peut être interprété par l'unité de contrôle du noeud de transmission N1 dans le but de générer une transmission d'une clé quantique via l'une des interfaces quantiques Q1, Q2, Q3 et Q4. Selon une variante de réalisation, des clés quantiques sont générées vers chacune des interfaces quantiques Q1, Q2, Q3 et Q4 et sont transmises vers un noeud de transmission adjacent que lorsque cela est nécessaire, sous contrôle d'une unité de contrôle dédiée du noeud de transmission N1.

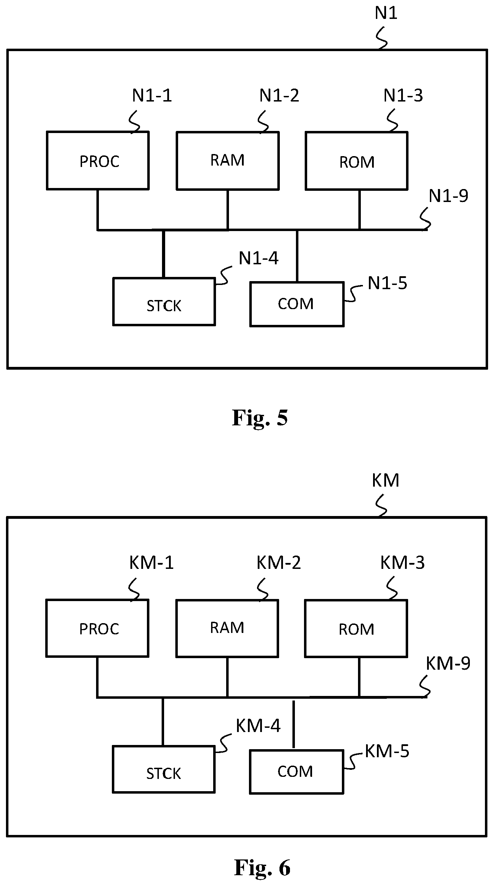

Un exemple d'architecture interne de l'unité de contrôle interne du noeud de transmission N1 est décrit plus loin en relation avec la Fig. 5.

La représentation du noeud de transmission N1 sur la Fig. 1 ne fait pas apparaitre l'ensemble de ces composants, à des fins de simplification. Par exemple, le noeud de transmission N1 comprend une unité de contrôle électronique à microprocesseur(s), non représentée sur la Fig. 1 dans la mesure où de tels détails d'implémentation du noeud de transmission N1 ne sont pas utiles à une bonne compréhension de l'invention. Selon un principe analogue, les détails d'implémentation du générateur QKB de clés quantiques ne sont pas développés ici. Le générateur QKB de clés quantiques du noeud de transmission N1 utilise un générateur aléatoire quantique puis un système de génération de clé QKD (du sigle anglais « Quantum Key Distribution ») logique couplé à un encodage optique des clés aptes à circuler alors sur une fibre optique. Selon un exemple de réalisation, le générateur QKB de clés quantiques utilise une découpe d'un faisceau optique d'une diode laser continue avec un modulateur électro-optique ou en pulsant électriquement une diode. Selon l'exemple représenté sur la Fig. 1, le module de communication IPN1 du noeud de transmission N1 comprend trois interfaces de communication IP1, IP2 et IP3 et le module quantique QN1 du noeud de communication IPN1 comprend quatre interfaces quantiques Q1, Q2, Q3 et Q4. Cet exemple n'est toutefois pas limitatif et un noeud de communication similaire peut comprendre un nombre différent d'interfaces de communication ainsi qu'un nombre différent d'interfaces quantiques.

Le noeud de transmission N1 est de plus configuré pour pouvoir transmettre à un dispositif externe, tel que par exemple un dispositif gestionnaire de clés, un résultat d'une fonction KDF de dérivation de clé appliquée à deux données dites données d'entrée. Par exemple, le noeud de transmission N1 est configuré pour recevoir une première donnée via l'une de ses interfaces de communication IP1, IP2 ou IP3 et pour opérer ensuite une fonction de dérivation de clé KDF, comme par exemple la fonction « ou exclusif » encore appelée communément fonction *xor* et dont l'opérateur est souvent représenté par le symbole « $\oplus$ », entre cette première donnée et une deuxième donnée d'entrée, et pour adresser ensuite le résultat de cette fonction de dérivation de clés appliquée aux deux données d'entrée à un dispositif tiers, via l'une des interfaces de communication IP1, IP2 et IP3. Selon un exemple, la première donnée d'entrée est une clé quantique reçue via des moyens optiques de transmission, depuis un noeud de transmission adjacent connecté au noeud N1. Selon un autre exemple, la première donnée d'entrée est une donnée reçue depuis une couche applicative, telle qu'un contenu à transmettre dans un réseau de communication comprenant le noeud de transmission N1, ou un fragment d'un tel contenu.

Le noeud de transmission N1 peut être associé à d'autres noeuds de transmission similaires pour former un réseau de communication, par exemple un réseau de communication maillé ou partiellement maillé.

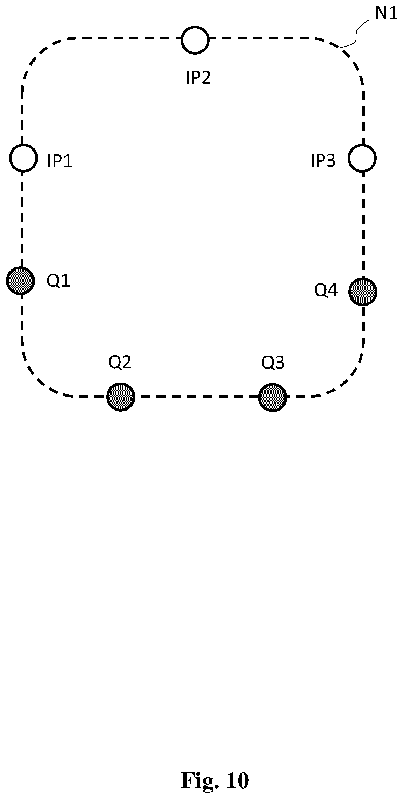

Dans la présente description, une clé quantique générée par le noeud de transmission N1 et transmise via l'interface quantique Q1 de ce noeud de transmission N1 est dénommée k11 ; une clé quantique générée par le noeud N1 et transmise via l'interface quantique Q2 de ce noeud de transmission N1 est dénommée k12, et ainsi de suite. Plus généralement, une clé quantique généré par un noeud de transmission Nn et transmise via une interface Qj de ce noeud de transmission Nn est appelée clé quantique Knj. Selon un mode de réalisation, chaque clé quantique transmise par le noeud de transmission N1, ou plus largement par un noeud de transmission similaire au noeud de transmission N1 est assortie d'un identifiant de clé quantique qui permet de faire référence à cette clé quantique par le biais de cet identifiant. La Fig. 10 est une représentation schématique simplifiée d'un noeud de transmission tel que déjà décrit sur la Fig. 1 selon laquelle le noeud est référencé par un identifiant de noeud de transmission (ici N1) et est caractérisé par le fait qu'il comprend des interfaces de communication de type IP (ici IP1, IP2, et IP3 selon l'exemple décrit) et des interfaces de transmission de clés quantiques (ici Q1, Q2, Q3 et Q4 selon l'exemple décrit). Dans la description qui suit, des exemples de transmission d'un contenu dans un réseau de communication N sont développés. A des fins de simplification, le réseau de communication N décrit plus loin comprend, outre le noeud de transmission N1 représenté ici, quatre noeuds de transmission N2, N3, N4 et N5 similaires au noeud de transmission N1 et comprenant chacun des interfaces de communication de type IP et des interfaces de transmission de clés quantiques Q aptes à opérer des communications et des transmissions de clés quantiques selon les liens représentés et décrits entre les différents noeuds de transmission. Dans la suite de la description, le détail des interfaces IP et des interfaces quantiques Q n'est plus représenté mais les liens entre deux interfaces quantiques sont illustrés par des lignes en pointillés et les liens entre des interfaces IP sont illustrés par des lignes continues.

La Fig. 2 illustre un exemple de transmission d'un contenu A à travers un réseau de communication N comprenant un réseau de distribution quantique QKDN, selon l'art antérieur. Le réseau N, comprend le noeud de transmission N1 précédemment décrit en relation avec la Fig. 1 ainsi que des noeuds de transmission N2, N3, N4 et N5 semblables aux noeuds de transmission N1, hormis que le nombre d'interfaces de communication dans le réseau N et d'interfaces quantiques de chacun des noeuds de transmission N2, N3, N4 et N5 peut varier. Selon un mode de réalisation, le réseau N et le réseau quantique de distribution de clés QKDN sont des réseaux maillés dans lesquels existent des liens de communication respectivement établis entre les noeuds de transmission N1 et N2, entre les noeuds de transmission N2 et N3, entre les noeuds de transmission N1 et N3, entre les noeuds de transmission N1 et N4, entre les noeuds de transmission N4 et N5, entre les noeuds de transmission N5 et N3, ainsi qu'entre les noeuds de transmission N2 et N4. Des liens équivalents existent pour ce qui concerne la couche de distribution de clés quantiques dite « couche quantique » entre des interfaces quantiques de ces noeuds, pour les mêmes liaisons inter-noeuds. En d'autres termes, un lien de distribution de clés quantiques existe entre les noeuds de transmissions N1 et N2, un autre lien de distribution de clés quantiques existe entre les noeuds de transmissions N2 et N3, et ainsi de suite pour les paires de noeuds N1 et N3, N1 et N4, N4 et N5, N5 et N3, et enfin N4 et N2. Bien évidemment cet exemple d'interconnexion des noeuds N1, N2, N3, N4 et N5 pour la couche de communication « classique » selon un protocole IP, et pour la couche quantique, n'est pas limitatif et le maillage quantique peut utiliser des liens d'interconnexion différents de ceux établis dans la couche quantique. Selon l'exemple de transmission du contenu A illustré en relation avec la Fig. 2, le noeud de transmission N1 reçoit, depuis une application ou un module applicatif apte à communiquer avec lui, un message comprenant une requête en transmission d'un contenu A, vers un noeud de transmission destinataire. Ce message est reçu via l'une des interfaces de communication du noeud de transmission N1. Selon l'exemple décrit, le noeud de transmission destinataire est le noeud de transmission N3. Le noeud de transmission N1 ayant eu réception de la requête en transmission du contenu A est dit « noeud de transmission source ». Selon un exemple non limitatif, le contenu A à transmettre est une clé symétrique de chiffrement à utiliser pour des partages sécurisés ultérieurs de contenus entre les noeuds de transmission N1 et N3 (source et destinataire). Un transfert de contenu entre les noeuds de transmission N1 et N3 peut être sécurisé par un échange préalable, lui-même hautement sécurisé, d'une clé de chiffrement grâce au mode opératoire décrit ci-après :

i) le noeud de transmission N1 reçoit le contenu A, accompagné d'un message de requête en transmission de ce contenu, et opère une fonction KDF de dérivation de clé en utilisant la fonction *xor* comme fonction KDF de dérivation de clé appliquée à deux données d'entrée de la fonction que sont le contenu A reçu, d'une part, et une clé quantique k11 générée par le noeud de transmission N1 et délivrée en outre au noeud de transmission N2 via le lien quantique entre les noeuds de transmission N1 et N2.
Un résultat res1 de fonction de dérivation de clé est adressé ensuite par le noeud de transmission N1 à un dispositif gestionnaire de clés KM, via un lien de communication établi entre le noeud de transmission N1 et le dispositif gestionnaire de clés KM.

ii) Le noeud de transmission N2 reçoit la clé quantique k11 émise par le noeud de transmission N1 via l'une de ses interfaces quantiques et opère une fonction de dérivation de clé en utilisant la fonction *xor* comme fonction KDF de dérivation de clé appliquée à deux données d'entrée de la fonction que sont la clé quantique k11 reçue, d'une part, et une clé quantique k21 générée par le noeud de transmission N2 (et délivrée en outre au noeud de transmission destinataire N3 via le lien quantique entre les noeuds de transmission N2 et N3). Un résultat res2 de fonction KDF de dérivation de clé est adressé ensuite par le noeud de transmission N2 au gestionnaire de clés KM, via un lien de communication établi entre le noeud de transmission N2 et le dispositif gestionnaire de clés KM.

iii) Le dispositif gestionnaire de clés KM opère une fonction *xor* entre le résultat res1 reçu en provenance du noeud de transmission N1 et le résultat res2 reçu en provenance du noeud de transmission N2 et transmet un résultat res3 au noeud de transmission destinataire N3, lequel peut alors retrouver le contenu A à partir de la clé quantique k21 reçue et émise par le noeud de transmission N2.

Un exemple d'architecture interne du dispositif gestionnaire de clés KM est décrit plus loin en relation avec la Fig. 6.

Selon cet exemple, il est considéré que le contenu A (ici une clé de chiffrement destinée à sécuriser des échanges ultérieurs) est transféré entre le noeud de transmission source N1 et le noeud de transmission destinataire N3 via le noeud de transmission N2, considéré ici comme un noeud de transmission intermédiaire, utilisés conjointement en combinaison avec le dispositif gestionnaire de clés KM, de sorte que le contenu A ne transite jamais lisiblement dans le réseau de communication N mais qu'il puisse être déterminé *in fine* par le noeud de transmission destinataire. Cette possibilité se fonde sur des propriétés de la fonction KDF de dérivation *xor* qui veut que :

$$(A \oplus k11) \oplus (k11 \oplus k21) = A \oplus k21$$

La sécurité recherchée pour la transmission du contenu A est assurée puisque, bien qu'en possession du contenu $A \oplus k21$, il n'est possible de retrouver le contenu A qu'en connaissance de la clé quantique k21. Or, le niveau de sécurité de transmission propre aux clé quantiques est élevé dans la mesure où le réseau quantique de distribution de clés QKDN présente les propriétés connues de résistance à une attaque de l'homme du milieu (attaque MITM de l'anglais « Man In The Middle ») puisqu'une tentative de lecture de tout ou partie d'une clé quantique altère cette dernière et qu'une altération de clé quantique peut être détectée par son destinataire grâce au phénomène d'intrication quantique. Le contenu A est ensuite disponible pour une application ou un module applicatif placé dans l'attente de celui-ci au niveau du noeud de transmission destinataire N3.

Une transmission du contenu A peut être opérée via un plus grand nombre de noeuds de transmission intermédiaires. Selon un autre exemple de transmission, la transmission du contenu A peut être réalisée à partir du noeud de transmission N1 (alors noeud de transmission source) vers le noeud de transmission N5 (alors noeud de transmission destinataire) via les noeuds de transmissions intermédiaires N2 et N4. Selon cet autre exemple, des résultats successifs d'opération de fonction KDF de dérivation de clés à deux entrées sont envoyés par les noeuds de transmission N1, N2 et N4 au gestionnaire KM et des clés quantiques sont adressées dans la couche quantique entre les noeuds de transmission N1 et N2, puis entre les noeuds de transmission N2 et N4 et enfin entre les noeuds de transmission N4 et N5. Le dispositif gestionnaire de clés KM adresse alors au noeud de transmission destinataire N5 un résultat d'opération effectué par lui-même :

$$(A \oplus k11) \oplus (k11 \oplus k22) \oplus (k22 \oplus k41) = A \oplus k41,$$

où

k11 est la clé quantique transmise entre le noeud de transmission N1 et le noeud de transmission N2,
k22 est la clé quantique transmise entre le noeud de transmission N2 et le noeud de transmission N4,
k41 est la clé quantique transmise entre le noeud de transmission N4 et le noeud de transmission N5.

Le contenu A est ici transféré selon le même principe de transmission sécurisée que dans l'exemple précédent relatif à une transmission du contenu A entre le noeud de transmission source N1 et le noeud de transmission destinataire N3.

L'utilisation d'un procédé (ou de protocole) de gestion des interactions entre les différents éléments du réseau de communication permet avantageusement de transmettre n'importe quel type de contenu entre deux noeuds de transmission du réseau de communication N.

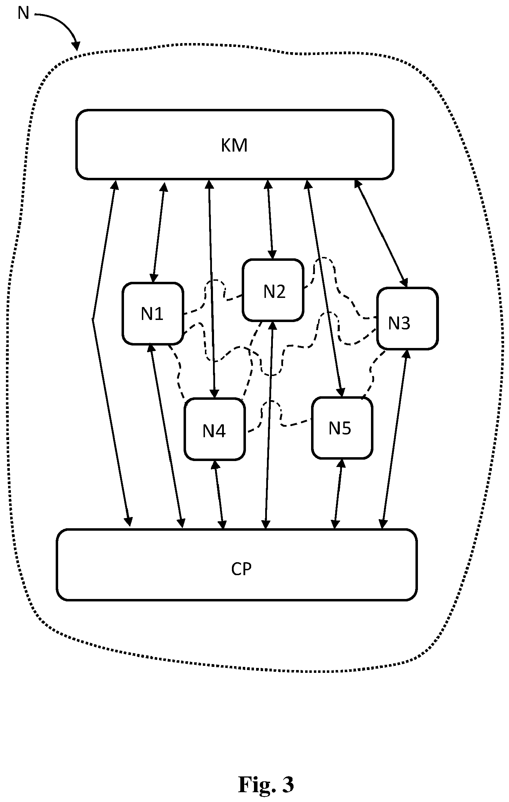

La Fig. 3 illustre une utilisation d'un dispositif gestionnaire de plan de contrôle CP pour organiser avantageusement un séquencement d'opérations utile au transfert sécurisé d'un contenu quelconque entre deux noeuds de transmission du réseau de communication N. Selon un mode de réalisation, le dispositif gestionnaire de plan de contrôle CP est centralisé, ce qui signifie que ses ressources sont concentrées dans un équipement ou un système dédié, localisé à un endroit précis. Selon une variante de réalisation, le dispositif gestionnaire de plan de contrôle est distribué, ce qui signifie alors que, bien qu'il puisse être considéré comme un dispositif ou un système gestionnaire dédié à l'organisation du plan de contrôle du réseau de communication N, ses ressources peuvent être réparties dans une pluralité d'équipements distants les uns des autres et configurés pour coopérer ensemble à l'implémentation des fonctions de gestion et de contrôle du réseau de communications N qui sont dévolues au dispositif gestionnaire de plan de contrôle CP.

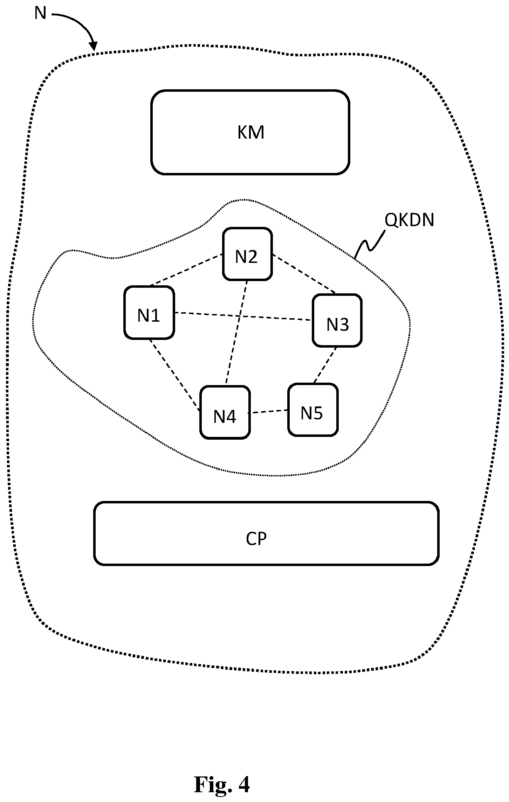

Le dispositif gestionnaire de plan de contrôle CP est configuré pour être connecté aux autres dispositifs du réseau de communication N et peut de ce fait communiquer avec n'importe quel noeud de transmission opérant dans le réseau de communication N, ainsi qu'avec le dispositif gestionnaire de clés KM, sous contrôle d'une unité de contrôle interne au dispositif gestionnaire de plan de contrôle CP. Selon l'exemple décrit, le dispositif gestionnaire de plan de contrôle CP n'est pas connecté au réseau quantique de distribution de clés QKDN du réseau de communication N, comme cela est représenté graphiquement sur la Fig. 4, le réseau quantique de distribution de clés QKDN n'étant utilisé que pour la transmission de clés quantiques entre des noeuds adjacents. Les double-flèches apparentes sur la Fig. 3 entre chacun des noeuds de transmission N1, N2, N3, N4 et N5 du réseau de communication N et le dispositif gestionnaire de clés KM, ou entre le dispositif gestionnaire de plan de contrôle CP et chacun des noeuds de transmissions N1, N2, N3, N4 et N5, ou encore entre le dispositif gestionnaire de plan de contrôle CP et le dispositif gestionnaire de clés KM, représentent des liens de communication via la couche de communication dite IP et les liaisons en pointillés de cette même Fig. 3 représentent des liaisons établies via des moyens optiques de transmission aptes à opérer des transmissions de clés quantiques dans la couche de communication dite quantique.

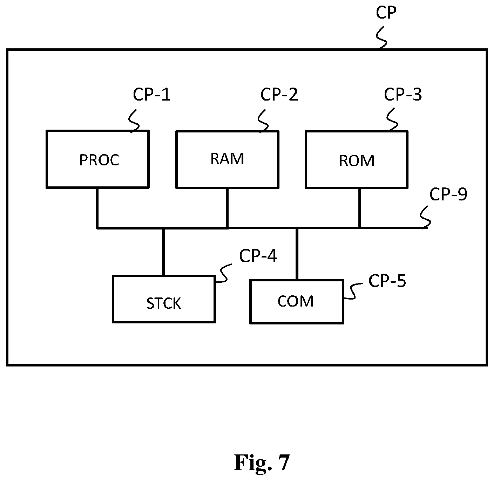

Un exemple d'architecture interne de l'unité de contrôle interne du dispositif gestionnaire de plan de contrôle CP est décrit plus loin en relation avec la Fig. 7.

La Fig. 5 illustre schématiquement un exemple d'architecture interne d'un noeud de transmission parmi les noeuds de transmission N1 à N5 du réseau de communication 1. Considérons à titre illustratif que la Fig. 5 illustre un agencement interne du noeud de transmission N1. On note que la Fig. 5 pourrait aussi illustrer schématiquement un exemple d'architecture matérielle du noeud de transmission N2, N3, N4 ou encore N5.

Selon l'exemple d'architecture matérielle représenté à la Fig. 5, le noeud de transmission N1 comprend alors, reliés par un bus de communication N1-9 : un processeur ou CPU (« Central Processing Unit » en anglais) N1-1 ; une mémoire vive RAM (« Random Access Memory » en anglais) N1-2 ; une mémoire morte ROM (« Read Only Memory » en anglais) N1-3 ; une unité de stockage telle qu'un disque dur (ou un lecteur de support de stockage, tel qu'un lecteur de cartes SD (« Secure Digital » en anglais) N1-4 ; au moins l'interface de communication N1-5 permettant au noeud de transmission N1 de communiquer avec des dispositifs présents dans le réseau de communication N tels que par exemple, les noeuds de transmissions N2, N3, N4 ou N5, le dispositif gestionnaire de clés KM ou encore le dispositif gestionnaire de plan de contrôle CP.

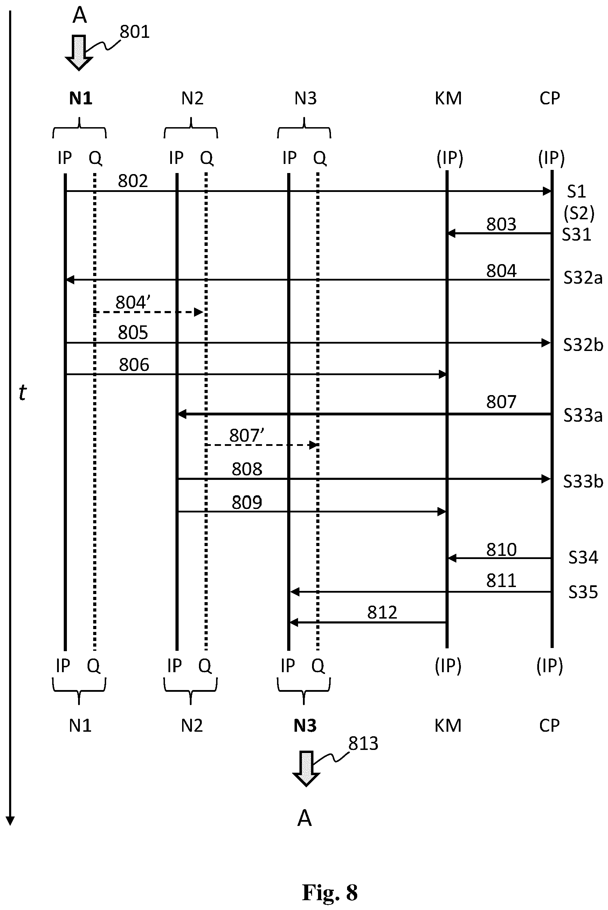

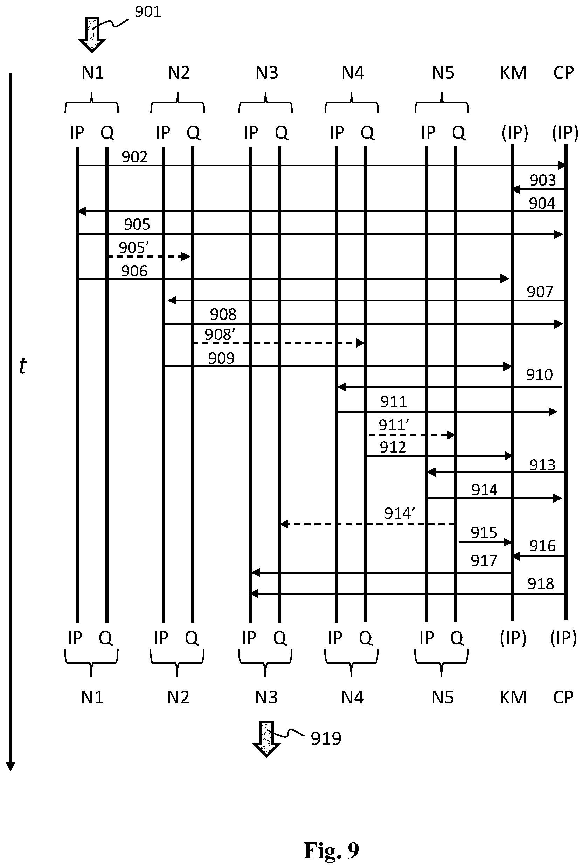

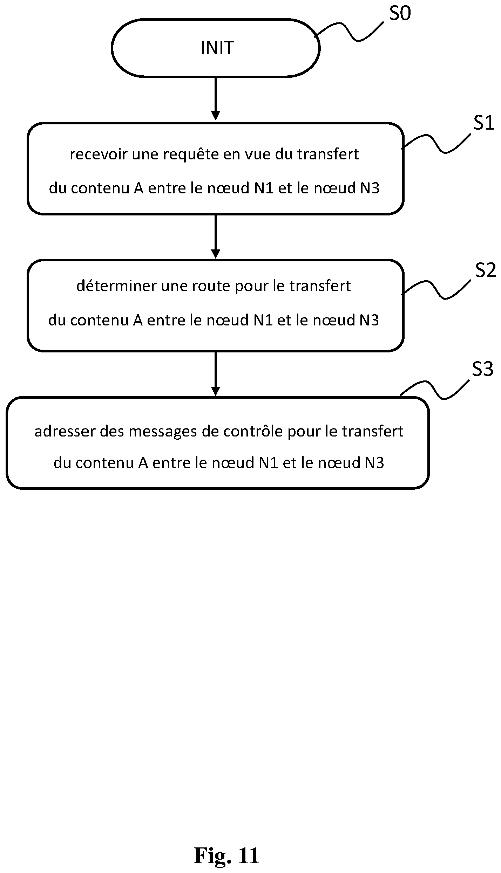

Le processeur N1-1 est capable d'exécuter des instructions chargées dans la RAM N1-2 à partir de la ROM N1-3, d'une mémoire externe (non représentée), d'un support de stockage (tel qu'une carte SD), ou d'un réseau de communication. Lorsque le noeud de transmission N1 est mis sous tension, le processeur N1-1 est capable de lire de la RAM N1-2 des instructions et de les exécuter. Ces instructions forment un programme d'ordinateur causant la mise en oeuvre, par le processeur N1-1, de tout ou partie d'un procédé de transmission d'un contenu décrit en relation avec la Fig. 11 ou avec les Fig. 8 et Fig. 9.

Tout ou partie d'un procédé décrit en relation avec les Fig. 11, Fig. 8 et Fig. 9, ou des variantes décrites de ce procédé, peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le noeud de transmission N1 comprend de la circuiterie électronique configurée pour mettre en oeuvre les procédés décrits en relation avec lui-même. Bien évidemment, le noeud de transmission N1 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

La Fig. 6 illustre schématiquement un exemple d'architecture interne du dispositif gestionnaire de clés KM. Considérons à titre illustratif que la Fig. 6 illustre un agencement interne du dispositif gestionnaire de clés KM.

Selon l'exemple d'architecture matérielle représenté à la Fig. 6, le dispositif gestionnaire de clés KM comprend alors, reliés par un bus de communication KM-9 : un processeur ou CPU (« Central Processing Unit » en anglais) KM-1 ; une mémoire vive RAM (« Random Access Memory » en anglais) KM-2 ; une mémoire morte ROM (« Read Only Memory » en anglais) KM-3 ; une unité de stockage telle qu'un disque dur (ou un lecteur de support de stockage, tel qu'un lecteur de cartes SD (« Secure Digital » en anglais) KM-4 ; au moins l'interface de communication KM-5 permettant au dispositif gestionnaire de clés KM de communiquer avec des dispositifs présents dans le réseau de communication N, tels que par exemple, les noeuds de transmission N1, N2, N3, N4 et N5 ou encore le dispositif gestionnaire de plan de contrôle CP. Le processeur KM-1 est capable d'exécuter des instructions chargées dans la RAM KM-2 à partir de la ROM KM-3, d'une mémoire externe (non représentée), d'un support de stockage (tel qu'une carte SD), ou d'un réseau de communication. Lorsque le dispositif gestionnaire de clés KM est mis sous tension, le processeur KM-1 est capable de lire de la RAM KM-2 des instructions et de les exécuter. Ces instructions forment un programme d'ordinateur causant la mise en oeuvre, par le processeur KM-1, de tout ou partie d'un procédé de transmission de contenu décrit en relation avec la Fig. 11 ou avec les Fig. 8 et Fig. 9, ou de variantes décrites de ce procédé.

Tout ou partie des procédés décrits en relation avec la Fig. 11, la Fig. 8 ou la Fig. 9, ou leurs variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif gestionnaire de clés KM comprend de la circuiterie électronique configurée pour mettre en oeuvre les procédés décrits en relation avec lui-même. Bien évidemment, le dispositif gestionnaire de clés KM comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

La Fig. 7 illustre schématiquement un exemple d'architecture interne du dispositif gestionnaire de plan de contrôle CP.

Selon l'exemple d'architecture matérielle représenté à la Fig. 7, le dispositif gestionnaire de plan de contrôle CP comprend alors, reliés par un bus de communication CP-9 : un processeur ou CPU (« Central Processing Unit » en anglais) CP-1 ; une mémoire vive RAM (« Random Access Memory » en anglais) CP-2 ; une mémoire morte ROM (« Read Only Memory » en anglais) CP-3 ; une unité de stockage telle qu'un disque dur (ou un lecteur de support de stockage, tel qu'un lecteur de cartes SD (« Secure Digital » en anglais) CP-4 ; au moins l'interface de communication CP-5 permettant au dispositif gestionnaire de plan de contrôle CP de communiquer (via la couche IP) avec des dispositifs présents dans le réseau de communication N, tels que par exemple, les noeuds de transmission N1, N2, N3, N4 et N5, ainsi que le dispositif gestionnaire de clés KM.

Le processeur CP-1 est capable d' exécuter des instructions chargées dans la RAM CP-2 à partir de la ROM CP-3, d'une mémoire externe (non représentée), d'un support de stockage (tel qu'une carte SD), ou d'un réseau de communication. Lorsque le dispositif gestionnaire de plan de contrôle CP est mis sous tension, le processeur CP-1 est capable de lire de la RAM CP-2 des instructions et de les exécuter. Ces instructions forment un programme d'ordinateur causant la mise en oeuvre, par le processeur CP-1, de tout ou partie d'un procédé de transmission d'un contenu, tel que par exemple le contenu A, à travers le réseau de communication N, tel que décrit en relation avec la Fig. 11 ou de variantes décrites de ce procédé.

Tout ou partie des procédés décrits en relation avec la Fig. 11, la Fig. 8 ou la Fig. 9, ou leurs variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif gestionnaire de plan de contrôle CP comprend de la circuiterie électronique configurée pour mettre en oeuvre les procédés décrits en relation avec lui-même. Bien évidemment, le dispositif gestionnaire de plan de contrôle CP comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

Un exemple de transmission d'un contenu A entre le noeud de transmission N1 et le noeud de transmission N3 du réseau de communication N est illustré sur la Fig. 8. La Fig. 8 représente un séquencement d'opérations (ou encore séquences ou étapes) entre les différents dispositifs connectés au réseau de communication N et coopérant pour opérer le transfert du contenu A via le réseau de communication N. Selon l'exemple décrit, le noeud de transmission N1 est le noeud de transmission source et le noeud de transmission N3 est le noeud de transmission destinataire. Le processus de transfert de contenu utilise le noeud intermédiaire N2 entre le noeud de transmission source N1 et le noeud de transmission destinataire N3. L'ensemble {N1 ; N2 ; N3} constitue une route R déterminée pour la transmission du contenu A via le réseau de communication N.

Préalablement au séquencement illustré en relation avec la Fig. 8, un module logiciel de niveau supérieur à la couche réseau opérant la transmission du contenu A envoie le contenu A à ladite couche réseau dans un message 801. Sur la Fig. 8, les messages de contrôle successifs déclenchant les opérations successivement réalisées sont représentés par des flèches horizontales entre les éléments impliqués que sont les noeuds de transmission N1, N2 et N3, le dispositif gestionnaire de clés KM et le dispositif gestionnaire de plan de contrôle CP. Chacun des noeuds de transmission est illustré par une double barre verticale (couche IP notée « IP » et couche quantique notée « Q »). Une lecture de haut en bas correspond au déroulement du temps, symbolisé par la flèche verticale annotée t sur la Fig. 8. Il est considéré ici qu'un envoi de message est d'une durée négligeable et qu'une flèche le représentant est en conséquence horizontale. Selon un mode de réalisation, le contenu A est transmis intégralement au noeud de transmission N1. Selon une variante, le contenu A est fragmenté en une pluralité de fragments et le processus décrit ci-après est réitéré autant que de besoin pour transmettre l'ensemble du contenu A par transmissions successives des fragments du contenu A. Le message 801 comprend une information selon laquelle le contenu A est destiné à être transmis au noeud de transmission N3 du réseau de communication N. La couche réseau du noeud de transmission N1 configurée pour collaborer à la transmission du contenu A envoie alors au dispositif gestionnaire de plan de contrôle CP, lors d'une étape S1, un message 802 de requête en transmission du contenu A. Ce message 802 de requête en transmission du contenu A comprend une information selon laquelle le noeud de transmission destinataire du contenu A est le noeud de transmission N3. Lors d'une étape S2 (n'étant pas associée à un envoi d'un message de contrôle), le dispositif gestionnaire de plan de contrôle CP détermine une route (ici, la route R = {N1 ; N2 ; N3}) dans le réseau de communication. La détermination de la route R est par exemple de nature à optimiser le temps de transmission du contenu A dans le réseau de communication N, ou bien déterminée en fonction de la fiabilité des liens de transmission entre les différents noeuds de transmission du réseau de communication N, ou encore selon une combinaison des deux. Selon un autre exemple, la détermination d'une route dépend des clés quantiques disponibles dans les mémoires tampon de clés quantiques de tout ou partie des interfaces quantiques des noeuds de transmission. Ces exemples ne sont évidemment pas limitatifs et la détermination d'une route R entre le noeud de transmission source et le noeud de transmission destinataire peut être quelconque. Les détails d'implémentation d'un procédé de détermination d'une route R entre un noeud de transmission source et un noeud de transmission destinataire via un ou plusieurs noeuds intermédiaires successifs ne sont pas développés ici dans la mesure où cela n'est pas utile à une bonne compréhension de l'invention. L'homme du métier saura choisir un algorithme de détermination d'une route parmi de multiples possibilités de routage selon la typologie du réseau de communication N et d'éventuels autres paramètres ou contraintes. Selon un mode de réalisation, le dispositif gestionnaire de plan de contrôle CP obtient une route déterminée par et depuis un dispositif tiers configuré pour opérer une telle détermination de route en fonction d'un ou plusieurs paramètres prédéfinis.

Une fois la route R obtenue, le dispositif gestionnaire de plan de contrôle CP ayant reçue la requête en transmission du contenu A attribue un identifiant (un numéro, par exemple) de service ServId à la transmission de contenu, permettant de créer une référence commune à toute opération requise en lien avec cette transmission du contenu A entre le noeud de transmission source et le noeud de transmission destinataire. Cette attribution est également opérée lors de l'étape S2. Le dispositif gestionnaire de plan de contrôle CP envoie ensuite, lors d'une étape S31, un message de contrôle 803 au dispositif gestionnaire de clés KM. Ce message 803 comprend l'identifiant de service ServId attribué, ce qui permet au dispositif gestionnaire de plan de contrôle CP d'opérer des actions en relation avec le transfert du contenu A dans le réseau de communication N, en fonction d'autres messages de contrôle à venir. Le dispositif gestionnaire de plan de contrôle CP détermine et opère ensuite un séquencement précis pour organiser le transfert du contenu A via la route déterminée. Ainsi, un premier message de contrôle est envoyé au noeud de transmission source, puis des messages de contrôle sont successivement envoyés à tous les noeuds intermédiaires de la route, et enfin un message de contrôle est envoyé au noeud de transmission destinataire. Ce message de contrôle envoyé au noeud destinataire est précédé d'un message de contrôle envoyé au dispositif gestionnaire de clés KM, lequel peut alors indiquer au noeud de transmission destinataire qu'il est le dernier noeud de transmission de la route déterminée en relation avec le service de transmission identifié via l'identifiant de service ServId ; l'indication permettant au noeud destinataire d'opérer des actions qui lui sont propres.

Ainsi, un message de contrôle 804 est envoyé par le dispositif gestionnaire de plan de contrôle CP au noeud de transmission N1 lors d'une étape S32a, lequel message de contrôle 804 comprend l'identifiant de service ServId ainsi qu'un identifiant d'une interface d'émission de clés quantiques du noeud de transmission N1, ou plus exactement d'une interface quantique du module quantique QN1 du noeud de transmission N1. Le choix de l'interface d'émission de clé quantique est déterminé pour que le module quantique QN1 puisse envoyer une clé quantique au noeud de transmission suivant dans le parcours qu'est la route R déterminée pour la transmission du contenu A dans le réseau de communication N. Pour ce faire, chacun des noeuds de transmission N1, N2 et N3, a précédemment notifié au dispositif gestionnaire de plan de contrôle CP quel est le nombre d'interfaces d'émission de clés quantiques dont il dispose et à quel dispositif noeud de transmission adjacent chacune de ses interfaces est connectée. Ces notifications sont opérées dans une phase préalable de reconnaissance des caractéristiques des noeuds de transmissions interconnectés pour former le réseau de communication N.

Le message de contrôle 804 permet donc au noeud de transmission N1 de savoir vers quel noeud de transmission suivant dans la route R déterminée il doit envoyer une clé quantique permettant à ce même noeud de réaliser des opérations subséquentes participant à la transmission sécurisée du contenu A, notamment en opérant une fonction de dérivation de clé et en adressant le résultat de cette opération au dispositif gestionnaire de clés KM. Pour donner suite à la réception du message de contrôle 804, le noeud de transmission N1 transmet dans un message 804' une clé quantique k11 au noeud de transmission N2, défini comme étant le noeud de transmission suivant dans la route déterminée. Le noeud de transmission N1 envoie alors, un message de contrôle 805, lors d'une étape S32b, en réponse au message de contrôle 804 qu'il a reçu.

Le message de contrôle 805 envoyé par le noeud de transmission N1 au dispositif gestionnaire de plan de contrôle CP comprend l'identifiant de service ServId utilisé comme référence commune pour tout message de contrôle en lien avec la transmission du contenu A dans le réseau de communication N, ainsi qu'un identifiant de la clé quantique transmise au noeud de transmission N2 (le noeud suivant dans la route déterminée) à considérer pour opérer les opérations subséquentes dont ce noeud de transmission a la charge. En outre, le noeud de transmission N1, noeud source, opère une fonction KDF de dérivation de clé, ici de type *xor* entre le contenu A et la clé quantique envoyée au noeud de transmission N2, et en adresse le résultat au dispositif gestionnaire de clés KM dans un message de contrôle 806 comprenant en outre l'identifiant de service ServId. Selon un processus sensiblement similaire, hormis le fait que le noeud suivant dans la route R déterminée ne soit pas le noeud source, mais de fait un noeud intermédiaire, le dispositif gestionnaire de plan de contrôle CP envoie ensuite au noeud de transmission intermédiaire N2, lors d'une étape S33a, un message de contrôle 807, lequel message de contrôle 807 comprend l'identifiant de service ServId et un identifiant d'interface d'émission de clé quantique à utiliser pour envoyer, depuis le noeud de transmission N2 une clé quantique au noeud de transmission suivant dans la route R déterminée, en l'occurrence et suivant l'exemple décrit, le noeud de transmission destinataire N3. De façon similaire à ce qui a été mis en oeuvre par le noeud de transmission source N1, le noeud de transmission intermédiaire N2 envoie une clé quantique k21 au noeud de transmission N3 (le suivant dans la route déterminée) dans un message 807', ainsi qu'un message de contrôle 808, lors d'une étape S33b, en réponse au message de contrôle 807 reçu, et un message de contrôle 809 à destination du gestionnaire de clés KM. Le message de contrôle 809 envoyé au gestionnaire de clés KM comprend le résultat d'une fonction KDF de dérivation de clés appliquée à la clé quantique reçue du noeud précédent et à la clé quantique envoyée au noeud suivant, assortie de l'identifiant de service ServId. De son côté, le gestionnaire de clés KM opère une fonction KDF de dérivation de clés, ici en l'occurrence la fonction *xor,* entre le résultat précédemment reçu du noeud de transmission N1 (noeud source) et le résultat reçu du noeud de transmission N2 (noeud intermédiaire) et conserve ce résultat. Le dispositif gestionnaire de plan de contrôle CP envoie ensuite un message de contrôle 810, lors d'une étape S34, au dispositif gestionnaire de clés KM, considérant que le noeud de transmission suivant dans la route R déterminée est le noeud destinataire N3. Le message de contrôle 810 comprend, outre l'identifiant de service ServId, une information selon laquelle le noeud de transmission suivant, en l'occurrence le noeud de transmission N3, est le noeud de transmission destinataire du contenu A, soit en d'autres termes, le dernier noeud de la route R déterminée. Cette information constitue un identifiant de fin de séquence. Selon un exemple d'implémentation, l'identifiant de fin de séquence est un code spécifique tel que, par exemple, le code « FF ». Selon un mode de réalisation, ce code est transmis dans un champ de données prévu pour transporter un numéro de séquence tel qu'un identifiant unique de séquence d'une suite d'identifiants uniques de séquence déterminée pour la transmission du contenu A en relation avec l'identifiant de service ServId. Ce message de contrôle permet au dispositif gestionnaire de clés KM de savoir qu'il doit envoyer au noeud de transmission destinataire un message de contrôle comprenant le résultat final des opérations successives de fonction KDF de dérivation de clés qu'il a opérées. Ce résultat final est ici, et selon l'exemple de transmission déjà décrit en rapport avec la Fig. 2 : $(A \oplus k11) \oplus (k11 \oplus k21)$. Le dispositif gestionnaire de plan de contrôle CP envoie de plus, lors d'une étape S35, un message de contrôle 811 au noeud de transmission destinataire N3. Ce message de contrôle 811 comprend, outre l'identifiant de service ServId, un identifiant de clé quantique à considérer pour opérer une opération subséquente de détermination du contenu A à partir de la clé quantique reçue du noeud de transmission intermédiaire précédent dans la route déterminée et du résultat final d'opérations de dérivation de clés reçu du dispositif gestionnaire de clés KM. Le résultat final des opérations réalisées par le dispositif gestionnaire de clés KM est envoyé au noeud de transmission destinataire N3 dans un message de contrôle 812. Enfin, le dispositif noeud destinataire N3 envoie le contenu A dans un message 813 à une couche applicative ou à tout le moins à un module applicatif du noeud de transmission N3 configuré pour recevoir le contenu A ou encore le fragment du contenu A concerné dans le cas où le contenu A est transmis de façon fragmentée par une succession d'exécutions du séquencement décrit ci-avant. Globalement et pour résumer, le séquencement des opérations visant à transmettre le contenu A, ou le cas échéant un fragment de contenu A, entre un noeud de transmission source et un noeud de transmission destinataire, via possiblement une pluralité de noeuds de transmission intermédiaires, selon une route R déterminée, comprend l'envoi et la réception de messages de contrôle, par le dispositif gestionnaire de plan de contrôle CP, successivement, vers chacun des noeuds de transmission constituant la route R (de transmission) déterminée, ici considéré comme le « noeud de transmission courant », de sorte que :

- le noeud de transmission courant envoie, via l'une de ses interfaces de transmission de clés quantiques, une clé quantique au noeud suivant dans la route déterminée, sauf si le noeud courant est le noeud de transmission destinataire,
- le noeud de transmission courant envoie au dispositif gestionnaire de clés KM un résultat d'une fonction KDF de dérivation de clé appliquée à une clé quantique reçue, d'une part, et une clé quantique envoyée, d'autre part, quand le noeud de transmission courant est un noeud de transmission intermédiaire, ou un résultat de cette fonction KDF de dérivation de clé appliquée au contenu A ou à un fragment du contenu A d'une part, et une clé quantique envoyée, d'autre part, quand le noeud de transmission courant est le noeud de transmission source,
- le noeud de transmission courant reçoive du dispositif gestionnaire de clés KM un résultat final d'opérations successives de dérivation de clé et détermine le contenu A ou un fragment du contenu A, le cas échéant, quand le noeud de transmission courant est le noeud destinataire. Pour cela, le dispositif gestionnaire de plan de contrôle CP envoie en outre, préalablement à ces messages de contrôle, un premier message de contrôle (ou message préalable) à destination du dispositif gestionnaire de clés KM, lorsque le noeud de transmission courant est le noeud source, et un deuxième message de contrôle (ou message de fin de séquence) à destination du dispositif gestionnaire de clés KM, lorsque le noeud de transmission courant est le noeud de transmission destinataire. Le premier message envoyé au dispositif gestionnaire de clés KM comprend un identifiant de service de transmission ServId et le deuxième message envoyé au dispositif gestionnaire de clés KM comprend une information selon laquelle le noeud de transmission courant est le noeud de transmission destinataire du contenu A ou d'un fragment du contenu A, le cas échéant.

Il ressort du résumé ci-avant que le procédé de transmission d'un contenu A tel que décrit est également fonctionnel entre un noeud de transmission source et un noeud de transmission destinataire lorsque ces deux noeuds de transmission sont adjacents dans le réseau de communication N, c'est-à-dire en l'absence de noeud de transmission intermédiaire entre le noeud de transmission source et le noeud de transmission destinataire. En effet, rien n'exclut qu'un contenu soit adressé entre deux noeuds de transmission adjacents.

Dans pareil cas, le noeud de transmission source (par exemple N1) opère une fonction KDF de dérivation de clés entre le contenu A à transmettre (ou un fragment de ce contenu le cas échéant) et une clé quantique dont il dispose (k11, par exemple) et en transmet ensuite le résultat re1 au dispositif gestionnaire de clés KM, outre le fait qu'il transmette cette clé quantique k11 au noeud de transmission suivant qu'est le noeud destinataire (par exemple N2). De son côté le noeud destinataire (ici N2) reçoit donc, depuis le dispositif gestionnaire de clés KM, le résultat re1 de la fonction KDF de dérivation de précédemment opérée par le noeud source, et opère une nouvelle fonction KDF de dérivation de clés entre ce résultat re1 reçu et la clé quantique k11 reçue, de sorte à retrouver le contenu A transmis. Ainsi, et même en l'absence d'un noeud de transmission intermédiaire dans la route (directe) déterminée, la transmission du contenu est sécurisée puisque $((A \oplus k11) \oplus k11) = A$ avec $re1 = (A \oplus k11)$ qui transite via le dispositif gestionnaire de clés KM.

Selon l'exemple de réalisation décrit ici, la fonction KDF de dérivation de clé est la fonction *xor.* Cet exemple n'est toutefois pas limitatif et une autre fonction KDF de dérivation de clé présentant les mêmes propriétés selon lesquelles lorsque ladite fonction KDF s'applique à deux données a et b, dites données d'entrée, le résultat $re = KDF(a, b)$ de ladite fonction appliquée auxdites deux données est nul lorsque lesdites deux données a et b sont égales entre elles, et que le résultat $re = KDF(a, b)$ de ladite fonction $KDF(a, b)$ appliquée auxdites deux données a et b est égal à l'une desdites deux données parmi a et b lorsque l'autre desdites deux données parmi a et b est nulle.

Selon un mode de réalisation, un accusé de réception est délivré à l'émetteur d'un message de contrôle par le destinataire du message de contrôle pour chacun des messages de contrôle décrits. Cela concerne les messages de contrôle envoyés depuis les noeuds de transmission, le dispositif gestionnaire de clés KM et le dispositif gestionnaire de plan de contrôle CP. Cela permet notamment avantageusement de détecter un dysfonctionnement ou une interruption d'un lien de transmission dans le réseau de communication N.

Un réseau de communication est assujetti à des baisses de performances de communications du fait d'engorgements ou de dysfonctionnements, une surveillance des performances du réseau peut conduire à la détermination d'une nouvelle route R pour la transmission d'un contenu, soit préalablement au début de la transmission, soit en cours de transmission.

La Fig. 9 décrit un séquencement d'opérations adapté pour une transmission du contenu A dans le réseau de communication N lorsque le lien de communication de la couche quantique du réseau de communication N déjà décrit est interrompu entre le noeud de transmission N2 et le noeud de transmission N3, toujours dans le cas d'une transmission entre le noeud de transmission source N1 et le noeud de transmission destinataire N3. Selon l'exemple décrit en relation avec la Fig. 9, la route R' déterminée par le dispositif gestionnaire de plan de contrôle CP est alors R' = {N1 ; N2 ; N4 ; N5 ; N3}. Après réception du contenu A dans un message 901, au niveau du noeud de transmission N1, le noeud de transmission source N1 envoie au dispositif gestionnaire de plan de contrôle CP un message 902 comprenant une requête en transmission du contenu A vers le noeud de transmission N3. Le dispositif gestionnaire de plan de contrôle CP détermine la route R' = {N1 ; N2 ; N4 ; N5 ; N3} permettant de s'affranchir d'une transmission de clé quantique entre le noeud de transmission N2 et le noeud de transmission N3, la liaison utile pour ce faire étant défaillante, ainsi qu'un identifiant de service ServId propre à cette transmission via cette route R' déterminée. Le dispositif gestionnaire de plan de contrôle CP envoie alors cet identifiant de service ServId au dispositif gestionnaire de clés KM dans un message de contrôle 903. Ensuite, tout comme selon l'exemple précédemment décrit en relation avec la Fig. 8, pour chacun des noeuds de transmission source et intermédiaires successifs N1, N2, N4 et N5 définissant la route R' déterminée {N1 ; N2 ; N4 ; N5 ; N3} vers le noeud de transmission destinataire N3, le dispositif gestionnaire de plan de contrôle CP envoie un message de contrôle déterminant sur quelle interface de transmission de clé quantique le noeud de transmission courant doit adresser une clé quantique, et reçoit un message comprenant un identifiant de clé quantique devant être traitée par le noeud de transmission suivant dans la route déterminée. L'envoi du message de contrôle vers le noeud de transmission courant déclenche en outre l'envoi, par le noeud de transmission configuré pour ce faire, d'un message comprenant le résultat d'une opération de dérivation de clé, via une fonction KDF de dérivation de clé, vers le dispositif gestionnaire de clés KM. Ainsi, le dispositif gestionnaire de plan de contrôle CP envoie successivement un message de contrôle 904 au noeud de transmission source N1 qui lui répond par un message de contrôle 905, un message de contrôle 907 au noeud de transmission intermédiaire N2 qui lui répond par un message de contrôle 908, un message de contrôle 910 au noeud de transmission intermédiaire N4 qui lui répond par un message de contrôle 911, un message de contrôle 913 au noeud de transmission intermédiaire N5 qui lui répond par un message de contrôle 914. Ces messages de contrôle déclenchent respectivement la transmission de clés quantiques dans des messages 905', 908', 911' et 914'. Enfin, le dispositif gestionnaire de plan de contrôle CP adresse un message de contrôle 916 au dispositif gestionnaire de clés KM comprenant une information selon laquelle le noeud de transmission suivant est le noeud destinataire, de sorte que le dispositif gestionnaire de clés KM transmette, dans un message 917, le résultat final d'opérations successives de fonctions de dérivation de clé qu'il a opéré à partir des messages 906, 909, 912 et 915 reçus de chacun des noeuds source et intermédiaires définissant la route R' déterminée vers le noeud destinataire N3 et comprenant chacun un résultat d'opération de dérivation de clé opéré par le noeud de transmission expéditeur du message en question. Le dispositif gestionnaire de plan de contrôle CP envoie alors un message de contrôle 918 au noeud de transmission destinataire N3, lequel message comprend un identifiant de clé quantique à considérer pour retrouver le contenu A à partir du résultat final reçu depuis le dispositif gestionnaire de clés KM et de la clé quantique reçue depuis le noeud de transmission précédent dans la route R' déterminée. Le noeud de transmission destinataire N3 transmet ensuite, dans un message 919, le contenu A reconstitué à un module applicatif du noeud de transmission destinataire N3 destiné à le recevoir. De la même façon que pour l'exemple de transmission déjà décrit en relation avec la Fig. 8, le contenu A peut être intégralement transmis selon le procédé décrit ci-avant, ou encore décomposé en fragments de sorte que les fragments soient successivement transmis lors d'itérations successives du procédé décrit ci-avant.

Selon un mode de réalisation, les messages de contrôle envoyés par le dispositif gestionnaire de plan de contrôle CP au noeud de transmission source ou aux noeuds de transmission intermédiaires comprennent chacun un identifiant unique SeqNum de séquence d'une suite d'identifiants uniques de séquences déterminée pour la transmission du contenu A en relation avec l'identifiant de service ServId. Selon ce mode de réalisation, chaque identifiant unique de séquence de la suite d'identifiants uniques de séquence est apte à déterminer le rang d'une séquence (ou d'une opération, ou étape) auquel il est associé dans une suite de séquences définie en relation avec la transmission du contenu A. Cela permet avantageusement de définir un ordre pour effectuer des opérations successives réalisées par le dispositif gestionnaire de clés KM dans le cas où la fonction de dérivation de clé utilisée par le gestionnaire de clés KM ne présente pas de propriétés de commutativité permettant d'opérer des opérations successives dont le résultat est indépendant du séquencement, tel que cela est le cas pour la fonction *xor,* par exemple, appliquée à deux données d'entrées a et b. En outre, l'utilisation d'un identifiant unique de séquence permet d'opérer en modifiant la route déterminée en cours de transmission d'un contenu A en cas de dysfonctionnement d'un noeud de transmission, en reprenant le routage à partir d'un noeud précédent dans la route déterminée par le dispositif gestionnaire de plan de contrôle.

Toujours selon ce mode de réalisation, chacun des noeuds de transmission est configuré pour relayer au dispositif gestionnaire de clés KM, dans le message comprenant un résultat de fonction de dérivation de clé, l'identifiant unique de séquence qu'il a reçu du gestionnaire de plan de contrôle CP. Selon une variante, les noeuds de transmission ne sont pas configurés pour relayer au dispositif gestionnaire de clés KM les identifiants uniques de séquence reçus depuis le dispositif gestionnaire de plan de contrôle CP, et ce dernier envoie directement ces identifiants uniques, définis de façon cohérente (par exemple en suivant un ordre incrémental), de sorte que le dispositif gestionnaire de clés KM sache comment ordonnancer les opérations à réaliser en fonction des valeurs respectives de ces identifiants uniques reçus depuis le dispositif gestionnaire de plan de contrôle CP.

La Fig. 11 est un ordinogramme illustrant les étapes d'un procédé de transmission d'un contenu A à travers le réseau de communication N, entre le noeud de transmission N1, dit noeud source, le noeud de transmission N3, dit noeud destinataire. Une étape S0 correspond à une étape d'initialisation au terme de laquelle l'ensemble des noeuds de transmission N1, N2 et N3 sont configurés pour opérer de façon nominale, des communications via des liens de communication dits IP, et des transmissions de clés quantiques via le réseau quantique QKDN de distribution de clés. Au terme de l'étape S0, le dispositif gestionnaire de clés KM et le dispositif gestionnaire de plan de contrôle CP sont également configurés et prêts à opérer. En particulier, chacun des noeuds de transmissions est prêt à recevoir depuis une couche applicative ou un module applicatif, un message comprenant une requête en transmission d'un contenu dans le réseau de communication N. Lors de l'étape S1, le noeud source N1 reçoit un message comprenant une requête en transmission du contenu A vers le noeud destinataire N3, encore appelé message de requête en transmission. Le noeud source N1 ayant alors interprété qu'il doit opérer comme noeud source, envoie un message de requête en transmission du contenu A au dispositif gestionnaire de plan de contrôle CP, configuré pour orchestrer des transmissions de contenu dans le réseau de communication N. Le dispositif gestionnaire de plan de contrôle CP détermine alors, lors de l'étape S2, une route R de transmission du contenu A dans le réseau de communication N. Selon l'exemple décrit ici, la route R déterminée comprend le noeud de transmission N2 dit noeud intermédiaire N2. Le dispositif gestionnaire de plan de contrôle détermine de plus un identifiant de service ServId, associé à la route R déterminée, lequel identifiant peut servir de référence pour toute action subséquente utile à la transmission d'un contenu A à travers le réseau de communication N, et notamment à faire référence à cette transmission du contenu A dans des messages de contrôle qu'il définit pour orchestrer les interactions entre les noeuds de transmissions N1, N2, N3, le dispositif gestionnaire de clés KM et lui-même. Enfin, lors de l'étape S3, le dispositif gestionnaire de plan de contrôle CP détermine et envoie des messages de contrôle successifs pour opérer la transmission du contenu A en utilisant le réseau quantique QKDN de distribution de clés afin de sécuriser au mieux la transmission du contenu A. Selon l'exemple décrit ici, les messages de contrôle pour le transfert du contenu A à l'étape S3 sont les messages 803 à 813 tels que décrits en relation avec la Fig. 8 ou encore des messages ou des messages équivalents (comprenant potentiellement des informations annexes).

Selon un mode de réalisation de l'invention, les messages de contrôle échangés lors de l'étape S3 comprennent des informations additionnelles, en plus de celles utiles à la transmission du contenu A selon le procédé décrit. Par exemple, de telles informations peuvent servir à éviter l'utilisation de deux clés quantiques identiques.

Selon un mode de réalisation, un identifiant de clé quantique peut être une longueur de clé quantique et chacune des clés quantiques générées dans un même noeud de transmission possède une longueur différente, au moins dans une même période de référence.

Le procédé de transmission d'un contenu, exécuté par le dispositif gestionnaire de plan de contrôle CP permet avantageusement de réaliser un contrôle de bout en bout des opérations nécessaires à une transmission sécurisée du contenu A en offrant un niveau de sécurité très élevé eu égard à l'utilisation d'un réseau de distribution quantique de clés. Il est ainsi possible d'éviter de nombreuses attaques, notamment des attaques du type « attaque de l'homme du milieu ». Avantageusement, un tel procédé permet en outre d'opérer des modifications du routage en cours de transmission. Le procédé est de plus compatible avec des clés quantiques de n'importe quelle taille.

Pour des raisons de performances et de coût d'infrastructures, le réseau de distribution quantique QKDN utilisé pour la distribution de clés quantiques entre les noeuds de transmission qui le composent est dédié à cet usage. Ainsi, seules des clés quantiques transitent dans le réseau quantique QKDN. Les messages de contrôle transitent quant à eux entre les noeuds de transmission et le dispositif gestionnaire de plan de contrôle CP, entre les noeuds de transmission et le dispositif gestionnaire de clés KM, ou encore entre ce dernier et le dispositif gestionnaire de plan de contrôle CP. En particulier, les identifiants de clés quantiques utilisés selon le protocole de transmission d'un contenu dans le réseau de communication N, transitent généralement via des liens de communication IP dits « classiques », par essence moins sécurisés que les liens quantiques optiques utilisés pour des transmissions de clés quantiques.

Selon un mode de réalisation, et aux fins de sécuriser plus encore la transmission d'un contenu dans le réseau de communication N, les identifiants de clés quantiques transmis dans des messages de contrôle sont transmis chacun sous la forme d'un condensat de la clé quantique transmise ou à transmettre qu'ils identifient. Ainsi, par exemple, un identifiant KIDnj permettant de faire référence à une clé quantique Knj, transmise ou à transmettre depuis une interface quantique Qj d'un noeud de transmission Nn, est le condensat KIDnj = H (Knj) où H est la fonction de hachage utilisé.

Un condensat (ou « *hash* », ou encore « *hashcode* ») de clé quantique est déterminé (calculé) de sorte à être unique pour chaque clé quantique possiblement utilisée. Pour cela, une clé quantique construite par un générateur de clé quantique n'est utilisée qu'une seule fois. Le terme « condensat » désigne ici le résultat d'une fonction cryptographique H de hachage appliqué à une clé quantique transmise ou à transmettre, permettant d'identifier cette clé quantique en vue d'un traitement ultérieur lors duquel il est fait référence à cette clé quantique.

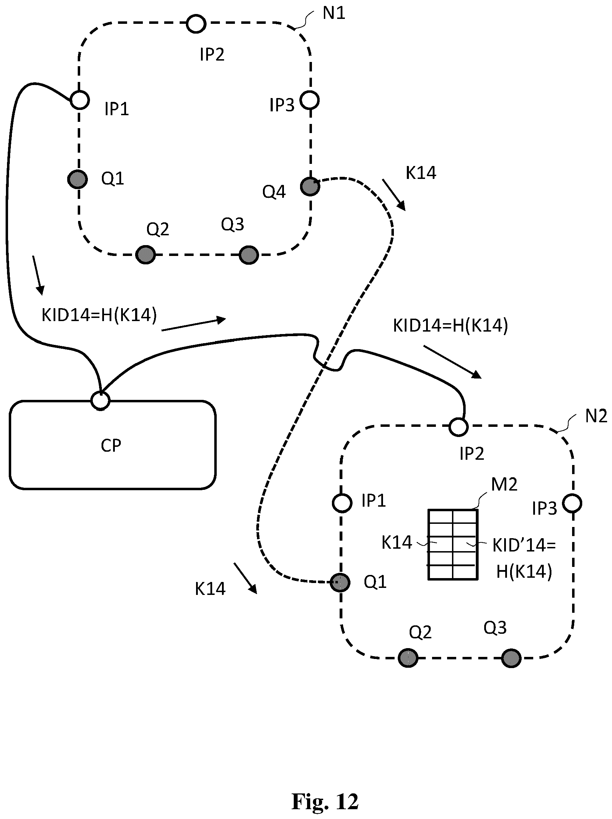

La Fig. 12 illustre une transmission d'un premier condensat KID14 d'une clé quantique K14 transmise entre les noeuds de transmission N1 et N2 du réseau de communication N selon une étape du protocole de transmission de contenu décrit dans la présente demande. Le condensat est ici utilisé comme un identifiant de la clé quantique K14 en vue d'un ou plusieurs traitements ultérieurs. Le condensat KID14 est calculé par le noeud de transmission N1, en appliquant à la clé quantique K14 la fonction de hachage H. Selon un mode de réalisation, la fonction de hachage H est la fonction SHA-256 de la famille bien connue SHA-2 d'algorithmes de hachage, ou encore la fonction SHA-512. Cet exemple n'est pas limitatif et une autre fonction de hachage peut être utilisée, telle que, par exemple, MD4 ou MD5. La clé quantique K14 est émise par le noeud de transmission N1, depuis son interface quantique Q4, vers le noeud de transmission N2. Le condensat KID14 calculé par le noeud de transmission N1 opère comme identifiant de la clé quantique K14 dans un premier message de contrôle émis depuis le noeud de transmission N1 vers le dispositif gestionnaire de plan de contrôle CP, puis dans un deuxième message de contrôle subséquent émis depuis le gestionnaire de plan de contrôle CP vers le noeud N2 qui est le noeud suivant dans le route déterminée pour transmettre un contenu entre un noeud de transmission source et un noeud de transmission destinataire. A réception de la clé quantique K14, le noeud de transmission N2 opère quant à lui un calcul de condensat en appliquant la même fonction de hachage H que celle précédemment utilisée par le noeud de transmission N1 et obtient alors un deuxième condensat KID'14 qui, sauf erreur de calcul liée à un dysfonctionnement, est égal au premier condensat KID14 calculé par le noeud de transmission N1. Le noeud de transmission N2, qui a reçu la clé quantique K14, enregistre alors cette clé quantique K14 en association avec le deuxième condensat KID'14, dans une mémoire M2, qui lui est préférentiellement interne. La mémoire M2 contient une liste de clés quantiques ordonnée pour que chacune des clés quantiques qui y sont mémorisées soit associée avec un identifiant de clé quantique qui est un condensat de la clé quantique. Le terme « liste » est utilisé ici de façon large et comprend également le cas d'une liste à un seul rang (une seule clé quantique et son identifiant sous forme de condensat de cette clé quantique).

Avantageusement, l'utilisation d'un condensat, résultat d'une fonction de hachage H accroît la sécurité de la transmission globale et réduit la surface d'attaque d'une telle transmission dans le réseau de communication N.

Astucieusement, et pour ce faire, chacun des noeuds de transmission présents dans le réseau de communication N et comprenant au moins une interface quantique (par exemple les noeuds de transmission N1 et N2) comprend, outre des moyens de génération, de stockage et de transmission d'une clé quantique, de la circuiterie électronique et/ou informatique configurée pour :

- opérer une fonction de hachage H ayant pour variable (donnée) d'entrée une clé quantique Knj transmise ou à transmettre vers un noeud de transmission adjacent,

- transmettre un premier condensat KIDnj, résultat de cette fonction de hachage H appliquée à ladite clé quantique Knj transmise ou à transmettre, via un lien de transmission préférentiellement non quantique et vers le dispositif gestionnaire de plan de contrôle CP, dans un message de contrôle établi selon le procédé de transmission de contenu dans le réseau de communication N,

et pour :

- opérer la fonction H de hachage ayant pour variable (donnée) d'entrée une clé quantique Knj reçue depuis un noeud de transmission adjacent pour obtenir un deuxième condensat KID'nj (identique au premier condensat KIDnj, sauf dysfonctionnement) et enregistrer dans une mémoire, préférentiellement interne, le deuxième condensat KID'nj en association avec ladite clé quantique Knj reçue,
- recevoir, depuis ledit gestionnaire de plan de contrôle CP, via un lien de communication préférentiellement non quantique, le premier condensat KIDnj opérant comme identifiant d'une clé quantique Knj, et,
- identifier la clé quantique Knj reçue, en vue d'opérer des traitements ultérieurs, par comparaison du premier condensat KIDnj reçu avec une liste de condensats comprenant le deuxième condensat KID'nj déterminé.

En étant configuré de la sorte, chaque noeud de transmission ainsi pourvu peut adresser une clé quantique Knj à un autre noeud de transmission du réseau et adresser un identifiant KIDnj hautement sécurisé de cette clé quantique Knj au dispositif gestionnaire de plan de contrôle CP, lequel pourra ensuite adresser cet identifiant au noeud suivant dans la route déterminée pour réaliser un transfert de contenu dans le réseau de communication N. Le noeud suivant saura retrouver la clé quantique Knj concernée, en parcourant sa mémoire dans laquelle sont stockés les condensats déterminés de clés quantiques reçues, pour opérer le cas échéant une fonction de dérivation de clé, et en adresser le résultat au dispositif gestionnaire de clés KM ainsi que toute opération subséquente utile à la mise en oeuvre d'un transfert de contenu selon le procédé décrit. Selon un mode de réalisation, le procédé de transmission d'un identifiant de clé quantique sous forme de condensat comprend une concaténation de la clé quantique avec un sel, pour augmenter encore le niveau de sécurité. Selon ce mode de réalisation, le sel est connu de tous les noeuds de transmission, par paramétrage. Dans ce cas, le sel utilisé pour le hachage de la clé quantique peut être fixe ou bien varier dans le temps. Par exemple, un nouveau sel commun à tous les noeuds de transmission peut être adressé régulièrement aux noeuds de transmission du réseau de communication N, ou ces derniers peuvent comprendre chacun une table de sels.

**Revendications**

1. Procédé de transmission d'un contenu (A) entre deux noeuds de transmission (N1, N3) d'un réseau de communication (N) comprenant lesdits deux noeuds de transmission (N1, N3) et au moins un autre noeud de transmission (N2) dit noeud intermédiaire de transmission (N2), lesdits noeuds de transmission (N1, N2, N3) étant compris en outre dans un réseau de distribution quantique (QKDN) de clés dites clés quantiques (Knj), le réseau de communication comprenant un dispositif gestionnaire de clés (KM) connecté auxdits noeuds de transmission (N1, N2, N3) et connecté audit réseau de distribution quantique (QKDN) de clés, lesdits noeuds de transmission (N1, N2, N3) comprenant chacun une pluralité d'interfaces de communication (IP1,...,IPi) pour communiquer dans le réseau de communication et une pluralité d'interfaces de transmission de clés quantiques (Q1, ..., Qj) pour transmettre et recevoir lesdites clés quantiques (Knj) dans ledit réseau de distribution quantique de clés, et lesdits noeuds de transmission étant configurés en outre pour opérer chacun une fonction de dérivation de clé (KDF) et en adresser le résultat audit dispositif gestionnaire de clés (KM) et pour opérer chacun une fonction d'extraction de clé à partir d'informations reçues dudit dispositif gestionnaire de clés (KM) et d'une clé quantique, ledit réseau de communication comprenant en outre un dispositif gestionnaire de plan de contrôle (CP) connecté auxdits noeuds de transmission (N1, N2, N3) et audit dispositif gestionnaire de clés (KM) et dont les ressources sont concentrées dans un équipement ou un système dédié à l'organisation d'un séquencement d'opérations utile au transfert sécurisé d'un contenu entre deux noeuds de transmission du réseau de communication (N) configuré pour exécuter les étapes :

 - recevoir (S1), depuis l'un (N1), dit noeud source, parmi lesdits deux noeuds de transmission (N1, N3), un message de requête en transmission dudit contenu (A) vers l'autre (N3), dit noeud destinataire, parmi lesdits deux noeuds de transmission (N1, N3), ledit message de requête comprenant un identifiant dudit noeud destinataire (N3),
 - obtenir (S2) une route (R) déterminée comme passant par ledit au moins un noeud intermédiaire (N2) de transmission ou par une suite de noeuds intermédiaires de transmission entre ledit noeud de source (N1) et ledit noeud destinataire (N3), et un identifiant de service (ServId) de transmission dudit contenu (A) associé à ladite route,

- émettre et recevoir des messages de contrôle (S3) vers et depuis lesdits noeuds de transmissions (N1, N2, N3) et vers ledit dispositif gestionnaire de clés (KM), aptes à générer des transmissions de clés (Knj) entre des paires de noeuds parmi lesdits noeuds (N1, N2, N3), définis selon ladite route (R) déterminée en relation avec ledit identifiant de service (ServId) de transmission,

ledit procédé de transmission étant **caractérisé en ce que**, lorsqu'un message de contrôle émis vers ou depuis ledit gestionnaire de plan de contrôle (CP) comprend un identifiant d'une clé quantique (Knj) transmise ou à transmettre entre deux noeuds de transmission (N1, N2, N3), cet identifiant est un condensat de ladite clé quantique (Knj) transmise ou à transmettre.

2.  Procédé de transmission d'un contenu (A) selon la revendication 1, dans lequel l'envoi et la réception desdits messages de contrôle (S3) comprennent :

    - envoyer (S31), audit dispositif gestionnaire de clés (KM), un message de contrôle comprenant ledit identifiant de service (ServId),
    - envoyer, audit noeud source (N1), un message de contrôle comprenant au moins ledit identifiant de service (ServId) et un identifiant d'une interface d'émission de clés quantiques,
    - recevoir, dudit noeud source, un message de contrôle comprenant au moins un identifiant de clé quantique sous forme de condensat de ladite clé quantique et ledit identifiant de service (ServId) de transmission dudit contenu (A),
    - envoyer, à chaque noeud intermédiaire de transmission, un message de contrôle comprenant au moins ledit identifiant de service (ServId), un identifiant d'interface de réception de clés quantiques, un identifiant de clé quantique reçue ou à recevoir, sous forme d'un condensat de ladite clé quantique via ladite interface de réception de clés quantiques et un identifiant d'interface d'émission de clés quantiques,
    - recevoir, de chaque noeud intermédiaire de transmission, un message de contrôle comprenant au moins un identifiant de clé quantique sous forme de condensat de ladite clé quantique et ledit identifiant de service (ServId) de transmission dudit contenu (A),
    - envoyer, audit dispositif gestionnaire de clés (KM), un message de contrôle comprenant un identifiant de fin de séquence et un identifiant du noeud destinataire, et,
    - envoyer, audit noeud destinataire, un message de contrôle comprenant au moins ledit identifiant de service (ServId), un identifiant d'interface de réception de clés quantiques et un identifiant de clé quantique sous forme de condensat de ladite clé quantique reçue ou à recevoir via ladite interface de réception de clés quantiques.

3.  Procédé de transmission d'un contenu (A) selon la revendication 2, dans lequel l'envoi du message de contrôle audit noeud source (N1) et l'envoi d'un message de contrôle à chacun desdits noeuds intermédiaires (N2) comprennent en outre un identifiant unique de séquence d'une suite d'identifiants uniques de séquences déterminée pour ladite transmission dudit contenu (A) en relation avec ledit identifiant de service (ServId), chaque identifiant unique de séquence de ladite suite d'identifiants uniques de séquence étant apte à déterminer le rang d'une séquence auquel il est associé dans une suite de séquences définie en relation avec ladite transmission dudit contenu (A).

4.  Procédé de transmission d'un contenu (A) selon l'une des revendications 1 à 3, dans lequel la fonction de dérivation de clé (KDF) présente des propriétés selon lesquelles ladite fonction (KDF) s'applique à deux données (a, b), dites données d'entrée, et que le résultat (re) de ladite fonction appliquée auxdites deux données est nul lorsque lesdites deux données (a, b) sont égales entre elles et que le résultat (re) de ladite fonction (KDF) appliquée auxdites deux données est égal à l'une desdites deux données lorsque l'autre desdites deux données est nulle.

5.  Procédé de transmission d'un contenu (A) selon la revendication précédente, dans lequel la fonction de dérivation de clés (KDF) est une fonction dite « OU exclusif » et dans lequel lesdites deux données (a, b) présentent la forme de mots binaires (a, b) de tailles (w) identiques.

6.  Réseau de communication (N) comprenant un dispositif gestionnaire de plan de contrôle (CP) configuré pour opérer un contrôle de transmission d'un contenu (A) entre deux noeuds de transmission (N1, N3) dudit réseau de communication (N) comprenant en outre au moins un autre noeud de transmission (N2) dit noeud intermédiaire de transmission (N2), lesdits noeuds de transmission (N1, N2, N3) étant compris en outre dans un réseau de distribution quantique (QKDN) de clés dites clés quantiques (Knj), le réseau de communication (N) comprenant un dispositif gestionnaire de clés (KM) connecté auxdits noeuds de transmission (N1, N2, N3) et connecté audit réseau de distribution quantique (QKDN) de clés, lesdits noeuds de transmission (N1, N2, N3) comprenant chacun une pluralité d'interfaces de communication (IP1,... ,IPi) pour communiquer dans le réseau de communication et une pluralité d'interfaces de transmission de clés quantiques (Q1, ..., Qj) pour transmettre et recevoir lesdites clés quantiques (Knj) dans ledit réseau de distribution quantique (QKDN) de clés, et lesdits noeuds de transmission (N1, N2, N3) étant configurés en outre pour opérer chacun une fonction de dérivation de clé (KDF) et en adresser le résultat audit dispositif gestionnaire de clés (KM) et pour opérer chacun une fonction (KDF) d'extraction de clé à partir d'informations reçues dudit dispositif gestionnaire de clés (KM) et d'une clé quantique, ledit réseau de communication comprenant en outre ledit dispositif gestionnaire de plan de contrôle (CP) connecté auxdits noeuds de transmission (N1, N2, N3) et audit dispositif gestionnaire de clés (KM) et, ledit dispositif gestionnaire de plan de contrôle (CP) comprenant de la circuiterie électrique et électronique dont les ressources sont concentrées dans un équipement ou un système dédié à l'organisation d'un séquencement d'opérations utile au transfert sécurisé d'un contenu entre deux noeuds de transmission du réseau de communication et configurée pour :

- recevoir (S1), depuis l'un (N1), dit noeud source, parmi lesdits deux noeuds de transmission (N1, N3), un message de requête en transmission dudit contenu (A) vers l'autre (N3), dit noeud destinataire, parmi lesdits deux noeuds de transmission (N1, N3), ledit message de requête comprenant un identifiant dudit noeud destinataire (N3),
- obtenir (S2) une route (R) déterminée comme passant par ledit au moins un noeud intermédiaire (N2) de transmission ou par une suite de noeuds intermédiaires de transmission entre ledit noeud source (N1) et ledit noeud destinataire (N3), et un identifiant de service (ServId) de transmission dudit contenu (A) associé à ladite route,
- émettre et recevoir (S3) des messages de contrôle vers et depuis lesdits noeuds de transmissions (N1, N2, N3) ou vers ledit dispositif gestionnaire de clés (KM), aptes à générer des transmissions de clés (Knj) entre des paires de noeuds parmi lesdits noeuds (N1, N2, N3), définis selon ladite route (R) déterminée en relation avec ledit identifiant de service (ServId) de transmission,

ledit réseau de communication étant **caractérisé en ce que**, lorsqu'un message de contrôle émis vers ou depuis ledit gestionnaire de plan de contrôle (CP) comprend un identifiant d'une clé quantique (Knj) transmise ou à transmettre entre deux noeuds de transmission (N1, N2, N3), cet identifiant est un condensat de ladite clé quantique (Knj) transmise ou à transmettre.

7. Réseau de communication (N) selon la revendication 6, dans lequel le dispositif gestionnaire de plan de contrôle (CP) comprend en outre de la circuiterie électronique configurée pour :

- envoyer, audit dispositif gestionnaire de clés (KM), un message de contrôle comprenant ledit identifiant de service (ServId),
- envoyer, audit noeud source (N1), un message de contrôle comprenant au moins ledit identifiant de service (ServId), un identifiant d'une interface d'émission de clés quantiques,
- recevoir, dudit noeud source (N1), un message de contrôle comprenant au moins un identifiant de clé quantique sous forme de condensat de ladite clé quantique et ledit identifiant de service (ServId) de transmission dudit contenu (A),
- envoyer, à chaque noeud intermédiaire (N2) de transmission, un message de contrôle comprenant au moins ledit identifiant de service (ServId), un identifiant d'interface de réception de clés quantiques et un identifiant de clé quantique reçue ou à recevoir sous forme de condensat de ladite clé quantique via ladite interface de réception de clés quantiques, un identifiant d'interface d'émission de clés quantiques,
- recevoir, de chaque noeud intermédiaire (N2) de transmission, un message de contrôle comprenant au moins un identifiant de clé quantique sous forme de condensat de ladite clé quantique et ledit identifiant de service (ServId) de transmission dudit contenu (A),
- envoyer, audit dispositif gestionnaire de clés (KM), un message de contrôle comprenant un identifiant de fin de séquence et un identifiant du noeud destinataire, et,
- envoyer, audit noeud destinataire (N3), un message de contrôle comprenant au moins ledit identifiant de service (ServId), un identifiant d'interface de réception de clés quantiques et un identifiant de clé quantique reçue ou à recevoir sous forme de condensat de ladite clé quantique via ladite interface de réception de clés quantiques.

8. Réseau de communication (N) selon la revendication 7, dans lequel le dispositif gestionnaire de plan de contrôle, comprenant une circuiterie électronique configurée pour insérer dans le message de contrôle audit noeud source (N1) et dans le message de contrôle à chacun desdits noeuds intermédiaires (N2) un identifiant unique de séquence (SeqNum) d'une suite d'identifiants uniques de séquences déterminée pour ladite transmission dudit contenu (A) en relation avec ledit identifiant de service (ServId), chaque identifiant unique de séquence (SeqNum) de ladite suite d'identifiants uniques de séquence étant apte à déterminer le rang d'une séquence auquel il est associé dans une suite de séquences définie en relation avec ladite transmission dudit contenu (A).

9. Réseau de communication (N) selon l'une des revendications 6 à 8 comprenant une pluralité de noeuds de transmission (N1, N2, N3, N4, N5), dans lequel chacun des noeuds de transmission est configuré en outre pour :

   - envoyer un message de contrôle au dispositif gestionnaires de clés (KM), ledit message adressé audit dispositif gestionnaire de clés (KM) comprenant un résultat de fonction de dérivation de clé, ledit identifiant de service (ServId) et un identifiant de séquence d'une suite d'identifiants uniques de séquences déterminée pour ladite transmission dudit contenu (A) en relation avec ledit identifiant de service (ServId), chaque identifiant unique de séquence de ladite suite d'identifiants uniques de séquence étant apte à déterminer le rang d'une séquence auquel il est associé dans une suite de séquences définie en relation avec ladite transmission dudit contenu (A), et
   - recevoir dudit dispositif gestionnaire de clés (KM) un message de contrôle comprenant ledit identifiant de service (ServId) et un résultat de fonction de dérivation de clés.

10. Noeud de transmission (N1, N2, N3, N4, N5) dans un réseau de distribution quantique (QKDN) de clés quantiques (Knj), le noeud de transmission étant configuré pour opérer, à partir d'au moins une clé quantique (Kjn), une fonction de dérivation de clé ou une fonction d'extraction de clé, ledit noeud de transmission comprenant des moyens de génération, de mémorisation, de réception et de transmission d'une clé quantique (Knj), ledit noeud de transmission (N1, N2, N3, N4, N5) comprenant en outre des moyens de réception et d'émission de messages de contrôle aptes à opérer, en combinaison avec un dispositif gestionnaire de clés (KM) et un dispositif gestionnaire de plan de contrôle (CP), un procédé de transmission d'un contenu (A) dans un réseau de communication (N) comprenant ledit noeud de transmission (N1, N2, N3, N4, N5), et ledit noeud de transmission étant **caractérisé en ce qu'**il comprend de la circuiterie électronique et/ou informatique configurée pour, lorsqu'un envoi de clé quantique depuis ledit noeud de transmission est requis :

    - opérer une fonction de hachage (H) ayant pour variable d'entrée ladite clé quantique (Knj) transmise ou à transmettre,
    - transmettre un premier condensat (KIDnj), résultat de ladite fonction de hachage (H) appliquée à ladite clé quantique (Knj) transmise ou à transmettre, ledit premier condensat opérant comme un identifiant de ladite clé quantique (Kjn) selon ledit procédé de transmission de contenu,

    et pour, à partir d'une clé quantique (Knj) reçue par ledit noeud de transmission :

    - opérer ladite fonction de hachage (H) ayant pour variable d'entrée ladite clé quantique (Knj) reçue pour obtenir un deuxième condensat (KID'nj) et enregistrer dans une mémoire (M2), le deuxième condensat (KID'nj) en association avec ladite clé quantique (Knj) reçue,
    - recevoir, le premier condensat (KIDnj) opérant comme un identifiant de clé quantique, et,
    - identifier une clé quantique (Knj) reçue, par comparaison du premier condensat (KIDnj) avec une liste de condensats comprenant le deuxième condensat (KID'nj) déterminé.

11. Produit programme d'ordinateur comprenant des instructions de codes de programme pour exécuter les étapes du procédé selon l'une des revendications 1 à 5, lorsque ledit programme est exécuté par un processeur d'un dispositif gestionnaire de plan de contrôle (CP).

12. Support de stockage comprenant un produit programme d'ordinateur selon la revendication précédente.

**Fig. 1**

KM

$(res3 = res\ 1 \oplus res\ 2)$

$res1 = A \oplus k11$

$res2 = k11 \oplus k21$

$res3 = res1 \oplus res\ 2$

k11

N2

k21

A

N1

N3

A

N4

N5

**Fig. 2**

**Fig. 3**

Fig. 4

N1

PROC N1-1

RAM N1-2

ROM N1-3

N1-9

STCK N1-4

COM N1-5

**Fig. 5**

KM

PROC KM-1

RAM KM-2

ROM KM-3

KM-9

STCK KM-4

COM KM-5

**Fig. 6**

**Fig. 7**

Fig. 8

Fig. 9

**Fig. 10**

S0

INIT

S1

recevoir une requête en vue du transfert
du contenu A entre le nœud N1 et le nœud N3

S2

déterminer une route pour le transfert
du contenu A entre le nœud N1 et le nœud N3

S3

adresser des messages de contrôle pour le transfert
du contenu A entre le nœud N1 et le nœud N3

**Fig. 11**

**Fig. 12**

Europäisches
Patentamt

European
Patent Office

Office européen
des brevets

# RAPPORT DE RECHERCHE EUROPEENNE

Numéro de la demande

EP 24 15 5421

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 907 927 A1 (DEUTSCHE TELEKOM AG [DE]) 10 novembre 2021 (2021-11-10) <br> * alinéa [0008] - alinéa [0043] * <br> * figures 1-3 * <br> ----- | 1-12 | INV. <br> H04L9/08 <br> H04L9/40 |
| X | EP 3 780 482 A1 (HUAWEI TECH CO LTD [CN]) 17 février 2021 (2021-02-17) <br> * alinéa [0005] - alinéa [0140] * <br> * figures 1-6 * <br> ----- | 1-12 | ADD. <br> H04L45/00 |
| X | XUEFU WANG QUANTUMCTEK CO ET AL: "Proposal on the key relay function of key management of quantum key distribution network;C22", <br> ITU-T DRAFT; STUDY PERIOD 2017-2020; STUDY GROUP 13; SERIES C22, INTERNATIONAL TELECOMMUNICATION UNION, GENEVA ; CH <br> , <br> vol. 16/13 <br> 7 mai 2019 (2019-05-07), pages 1-3, XP044267152, <br> Extrait de l'Internet: <br> URL:https://www.itu.int/ifa/t/2017/sg13/exchange/wp3/q16/201905/Contributions/C22 Proposal on the key relay function of key management of quantum key distribution network.docx <br> [extrait le 2019-05-07] <br> * le document en entier * <br> ----- | 1-12 | |

DOMAINES TECHNIQUES
RECHERCHES (IPC)

H04L
H04B
H04W
G06F

-/--

Le présent rapport a été établi pour toutes les revendications

| Lieu de la recherche | Date d'achèvement de la recherche | Examinateur |
|---|---|---|
| Munich | 24 mai 2024 | Ghomrasseni, Z |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P04C02)

**RAPPORT DE RECHERCHE EUROPEENNE**

Numéro de la demande

EP 24 15 5421

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KAORU KENYOSHI NICT JAPAN: "Draft new Recommendation ITU-T Y.3803 (formerly Y.QKDN_KM): "Key management for quantum key distribution Networks" - for consent;TD280/PLEN", ITU-T DRAFT; STUDY PERIOD 2017-2020; STUDY GROUP 11; SERIES TD280/PLEN, INTERNATIONAL TELECOMMUNICATION UNION, GENEVA ; CH , vol. 16/13 5 octobre 2020 (2020-10-05), pages 1-23, XP044296517, Extrait de l'Internet: URL:https://www.itu.int/ifa/t/2017/sg11/docs/201218/td/ties/gen/T17-SG11-201218-TD-GEN-1475!!ZIP-E.zip td1475_ils_SG13_att2.docx [extrait le 2020-10-05] * le document en entier * ----- | 1-12 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 24 mai 2024 | Ghomrasseni, Z |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

**ANNEXE AU RAPPORT DE RECHERCHE EUROPEENNE
RELATIF A LA DEMANDE DE BREVET EUROPEEN NO.**

EP 24 15 5421

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-05-2024

| Document brevet cité au rapport de recherche | | Date de publication | Membre(s) de la famille de brevet(s) | | Date de publication |
|---|---|---|---|---|---|
| EP 3907927 | A1 | 10-11-2021 | EP | 3907927 A1 | 10-11-2021 |
| | | | WO | 2021224392 A1 | 11-11-2021 |
| EP 3780482 | A1 | 17-02-2021 | CN | 110380844 A | 25-10-2019 |
| | | | CN | 112865964 A | 28-05-2021 |
| | | | EP | 3780482 A1 | 17-02-2021 |
| | | | US | 2021044432 A1 | 11-02-2021 |
| | | | US | 2023188334 A1 | 15-06-2023 |
| | | | WO | 2019196921 A1 | 17-10-2019 |

EPO FORM P0460

Pour tout renseignement concernant cette annexe : voir Journal Officiel de l'Office européen des brevets, No.12/82